(19) **Europäisches Patentamt / European Patent Office / Office européen des brevets**

(11) **EP 4 400 201 A1**

(12) **EUROPEAN PATENT APPLICATION**
published in accordance with Art. 153(4) EPC

(43) Date of publication:
**17.07.2024 Bulletin 2024/29**

(21) Application number: **22866778.8**

(22) Date of filing: **09.09.2022**

(51) International Patent Classification (IPC):
**B01D 53/60** (2006.01) **B01J 23/89** (2006.01)
**B01J 37/02** (2006.01) **B01J 23/02** (2006.01)
**B01J 23/10** (2006.01)

(52) Cooperative Patent Classification (CPC):
**B01D 53/60; B01J 23/02; B01J 23/10; B01J 23/89; B01J 37/02**

(86) International application number:
**PCT/CN2022/118245**

(87) International publication number:
**WO 2023/036317 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2021 CN 202111055118**
**09.09.2021 CN 202111055151**
**09.09.2021 CN 202111055913**
**09.09.2021 CN 202111054717**

(71) Applicants:
• **China Petroleum & Chemical Corporation**
**Beijing 100728 (CN)**
• **Sinopec Research Institute of Petroleum Processing Co., Ltd.**
**Beijing 100083 (CN)**

(72) Inventors:
• **JIANG, Qiuqiao**
**Beijing 100083 (CN)**
• **SONG, Haitao**
**Beijing 100083 (CN)**
• **FENG, Menglong**
**Beijing 100083 (CN)**
• **ZHAO, Dongyue**
**Beijing 100083 (CN)**
• **QU, Yakun**
**Beijing 100083 (CN)**
• **SHA, Hao**
**Beijing 100083 (CN)**

(74) Representative: **Hoffmann Eitle**
**Patent- und Rechtsanwälte PartmbB**
**Arabellastraße 30**
**81925 München (DE)**

(54) **CATALYST FOR REDUCING SOX AND NOX IN FLUE GAS, PREPARATION METHOD THEREFOR, AND METHOD FOR REMOVING SOX AND NOX FROM FLUE GAS**

(57) The present invention relates to a catalyst for simultaneously reducing both SOx and NOx in flue gas and a preparation method and use thereof, and a method for simultaneously reducing both SOx and NOx from flue gas.

EP 4 400 201 A1

**Description**

**Technical field**

The present invention relates to a catalyst for simultaneously reducing both SOx and NOx in flue gas and a preparation method and use thereof, and a method for simultaneously reducing both SOx and NOx from flue gas.

**Background**

During the catalytic cracking reaction, coke is deposited on the catalyst due to the reaction of hydrocarbons, which reduces the catalyst activity. After the coke-containing catalyst is separated from the hydrocarbons adsorbed on the catalyst through the stripping section, it is transported to the regenerator. In the regenerator, the coke-containing catalyst is fully contacted with the air at high temperature, and the coke on the catalyst surface is burned off, allowing the catalyst activity to be restored. When the coke is burned off the catalyst, SOx and NOx are generated, and these gases are emitted into the air and cause atmospheric pollution. As environmental protection requirements become more and more stringent, emission standards for flue gas pollutants are becoming more and more stringent.

At present, the main technical measures to reduce the emission of flue gas pollutants from catalytic cracking regeneration include: regenerator optimization, use of additives and flue gas post-treatment. Among them, the method of adding the additive is widely used because of its advantages of flexible operation and no need to invest in facilities. At present, desulfurization or denitrification additives mainly remove one type of flue gas pollutant alone. For example: CN1334316A discloses a sulfur transfer agent comprising a magnesia-alumina spinel-containing composition and a Ce/V oxide, which is used to remove SOx from the catalytic cracking flue gas; CN104399478A discloses a sulfur transfer agent and its preparation and evaluation method, which is used to remove SOx from the catalytic cracking flue gas; CN101311248B provides a composition capable of reducing the emission of NOx in the catalytic cracking regeneration flue gas, which is used to reduce NOx in the catalytic cracking flue gas.

The above-mentioned patent documents have good removal effects when separately removing SOx or NOx in the regeneration flue gas, but they cannot remove nitrogen oxides and sulfur oxides at the same time/simultaneously. This results in a larger total demand for additives if SOx and NOx need to be removed at the same time. On the one hand, it increases the cost of removing flue gas pollutants; on the other hand, a larger amount of additives will affect the distribution of catalytic cracking products.

In order to reduce the total addition amount of additives, enhance the emission reduction effect of additives, and improve the competitive power of the additive technology, starting from the purpose of removing SOx and NOx in combination, the present invention develops a new catalyst for removing the flue gas pollutants in combination.

**Summary of the Invention**

The purpose of the present invention is to overcome the shortcomings of the existing desulfurization and denitrification technology that it is unable to simultaneously remove nitrogen oxides and sulfur oxides and that the cost is too high, and to provide a catalyst for simultaneously reducing both SOx and NOx in flue gas (especially catalytic cracking regeneration flue gas) and a preparation method and use thereof, and a method for simultaneously removing both SOx and NOx from flue gas (especially catalytic cracking regeneration flue gas). The catalyst provided by the present invention has high activity and can effectively reduce the emission of SOx and NOx in flue gas, and the method of preparing the catalyst provided by the present invention is simple.

In order to achieve the above object, in a first aspect of the present invention there is provided a catalyst for (simultaneously) reducing NOx and SOx emissions in flue gas, which catalyst comprises a support and, loaded on the support, a first active component selected from rare earth metals, a second active component selected from Group VIII non-precious metals and a precious metal component; based on the total weight of the catalyst, the content of the support is 25-95 wt%, the content of the first active component as oxide is 4-60 wt%, the content of the second active component (as_oxide) is 2-12 wt%, and the content of the precious metal component as element is 0.01-2 wt%;

as metal oxides, the molar ratio of the first active component to the second active component is (0.5-15):1; for example (1-10): 1, or (2-5): 1.

In the present invention, in the absence of contrary teaching, "based on the total weight of the catalyst" means that the total weight of the catalyst is 100wt%; when referring to the constitution and content of a component, in the absence of a definitive basis, the basis is established on that the total weight of said component is 100 wt%.

In order to achieve the above object, in a second aspect of the present invention there is provided a (simultaneous) desulfurization and denitrification catalyst, based on the total weight of the catalyst, the catalyst comprises by weight percent:

25-92 wt%, or 40-85 wt%, or 45-80 wt% of an inorganic oxide matrix as oxide;

6-70 wt%, or 12-60 wt%, or 12-48 wt% of a rare earth metal component as oxide (preferably, the rare earth metal component is selected from one or more of La, Ce, Pr and Nd, more preferably La);

1-12 wt%, or 2-10 wt%, or 2-8 wt% of a non-precious metal component(s) selected from Groups VB, VIII, IB, and IIB as oxide (preferably, the non-precious metal component(s) selected from Groups VB, VIII, IB, and IIB is one or more of Fe, Co, Ni, Cu, Zn and V, more preferably Co);

1-10 wt%, or 1-8 wt%, or 2-5 wt% of Group VIIB non-precious metal component as oxide (preferably the Group VIIB non-precious metal component is Mn);

0.01-1.5 wt%, or 0.02-1.2 wt%, or 0.02-1.0 wt% of a precious metal component as element (preferably the precious metal component is selected from one or more of Ru, Rh, Re, Pt, Pd, Ag, Ir and Au, more preferably one or more of Pt, Pd and Rh, most preferably Pd).

In order to achieve the above object, in a third aspect of the present invention there is provided a catalyst capable of/for simultaneously reducing both SOx and NOx in flue gas, the catalyst comprises a support and, loaded on the support, a first active component selected from rare earth metals, a second active component selected from non-precious metals of Groups VB, VIII, IB, and IIB, a third active component selected from Group IIA metals, and a precious metal component; based on the total weight of the catalyst, the content of the support is 25-93 wt%, the content of the first active component as oxide is 4-60 wt%, the content of the second active component (as_oxide) is 2-30 wt%, the content of the third active component (as_oxide) is 1-30 wt%, and the content of the precious metal component as element is 0.01-2 wt%. Preferably, as metal oxides, the molar ratio of the first active component to the second active component is (0.4-12):1, preferably (0.5-8):1, further preferably (1-4):1.

In order to achieve the above object, in a fourth aspect of the present invention there is provided a catalyst for simultaneously reducing both SOx and NOx in flue gas, based on the total weight of the catalyst, the catalyst contains 25-95 wt% of inorganic oxide matrix; 2-70 wt% of rare earth metal component as oxide; 1-30 wt% of Group IIA metal component as oxide; 1-15 wt% of non-precious metal component(s) selected from Groups VB, VIII, IB, and IIB as oxide; 1-10 wt% of Group VIIB non-precious metal component as oxide; and 0.01-1.5 wt% of precious metal component as element. Preferably, as metal element, the molar ratio of the rare earth metal component to the non-precious metal component(s) selected from Groups VB, VIII, IB, and IIB is (0.4-18):1, for example (0.5-12): 1, or (1-6):1.

In order to achieve the above object, in a fifth aspect of the present invention there is provided a method for preparing the catalyst for (simultaneously) reducing NOx and SOx emissions in flue gas according to the first aspect, which method comprises:

(1) providing a precursor solution containing a precursor of a first active component selected from rare earth metals, and a precursor of a second active component selected from Group VIII non-precious metals;
(2) carrying out a coprecipitation reaction between the precursor solution and a coprecipitant, then drying and calcining;
(3) mixing and slurrifying the solid product obtained in step (2) and a support and/or a precursor of a support to produce a slurry, then drying and calcining the slurry;
(4) impregnating the solid product obtained in step (3) with a solution containing a precursor of precious metal component as impregnation solution, then drying and/or calcining.

In a sixth aspect of the present invention there is provided a method for preparing a desulfurization and denitrification catalyst, which comprises the steps of:

S1. Preparation of active metal precursor: using the co-precipitation method or the sol-gel method;
S2. Preparation of semi-finished catalyst product: mixing and slurrifying an active metal precursor and an inorganic oxide matrix and/or a precursor of inorganic oxide matrix and optionally a precursor of precious metal component to produce a slurry, drying and calcining the slurry;
the method also optionally comprises: S3. impregnating the semi-finished catalyst product obtained in step S2 with a solution containing a precursor of precious metal component as impregnation solution to produce a solid product, and drying and calcining the solid product;
wherein the active metal in the active metal precursor comprises a rare earth metal component, non-precious metal component(s) selected from Groups VB, VIII, IB, and IIB, and a Group VIIB non-precious metal component;
the active metal precursor, the inorganic oxide matrix and/or the precursor of inorganic oxide matrix, and the precursor of precious metal component are used in such amounts that the prepared catalyst, based on the total weight of the catalyst, comprises by weight percent: as oxide: 25-92 wt% of inorganic oxide matrix, 6-70 wt% of rare earth metal component, 1-12 wt% of non-precious metal component(s) selected from Groups VB, VIII, IB, and IIB, 1-10 wt% of Group VIIB non-precious metal component; and

0.01-1.5 wt% of precious metal component as element.

In a seventh aspect of the present invention there is provided a method for preparing a catalyst capable of simultaneously reducing SOx and NOx in flue gas, which method comprises the steps of:

(1) providing a precursor solution containing a precursor of a first active component selected from rare earth metals, a precursor of a second active component selected from non-precious metals of Groups VB, VIII, IB, and IIB, and a precursor of a third active component selected from Group IIA metals;
(2) carrying out a coprecipitation reaction between the precursor solution and a coprecipitant, then drying and calcining;
(3) mixing and slurrifying the solid product obtained in step (2) and a support and/or a precursor of a support and optionally a precursor of precious metal component to produce a slurry, then drying and calcining the slurry;

the method also optionally comprises: (4) impregnating the solid product obtained in step (3) with a solution containing a precursor of precious metal component as impregnation solution, then drying and/or calcining;
the precursor of first active component, the precursor of second active component, the precursor of third active component, the support and/or the precursor of support, and the precursor of precious metal component are used in such amounts that in the prepared catalyst, based on the total weight of the catalyst, the content of the support is 25-93 wt%, the content of the first active component as oxide is 4-60 wt%, the content of the second active component (as_oxide) is 2-30 wt%, the content of the third active component (as_oxide) is 1-30 wt%, and the content of the precious metal component as element is 0.01-2 wt%.

In an eighth aspect of the present invention there is provided a method for preparing a catalyst for simultaneously reducing both SOx and NOx in flue gas, which method comprises the steps of:

(1) a co-precipitation method or a sol-gel method is used to produce an active metal precursor;
(2) mixing and slurrifying an active metal precursor and an inorganic oxide matrix and/or a precursor of inorganic oxide matrix and optionally a precursor of precious metal component to produce a slurry, drying and/or calcining the slurry to produce a composition; the method also optionally comprises: (3) impregnating the composition obtained in step (2) with a solution containing a precursor of precious metal component as impregnation solution to produce a solid product, and then drying and/or calcining the soild product;

wherein the active metal in the active metal precursor comprises rare earth metal component, Group IIA metal component, non-precious metal component(s) selected from Groups VB, VIII, IB, and IIB, and Group VIIB non-precious metal component;
the active metal precursor, the inorganic oxide matrix and/or the precursor of inorganic oxide matrix, and the precursor of precious metal component are used in such amounts that the prepared catalyst, based on the total weight of the catalyst, comprises 25-95 wt% of inorganic oxide matrix; 2-70 wt% of rare earth metal component as oxide; 1-30 wt% of Group IIA metal component as oxide; 1-15 wt% of non-precious metal component(s) selected from Groups VB, VIII, IB, and IIB as oxide; 1-10 wt% of Group VIIB non-precious metal component as oxide; and 0.01-1.5 wt% of precious metal component as element.

In a ninth aspect of the present invention there is provided the use of the catalyst according to any one of the preceding aspects in simultaneously removing SOx and NOx in flue gas. Specifically, the present invention provides a method for simultaneously removing SOx and NOx from a flue gas containing SOx and NOx, and the method comprises: contacting the flue gas containing SOx and NOx with the catalyst according to any one of the preceding aspects in a condition for simultaneously removing SOx and NOx. Preferably, the condition for simultaneously removing SOx and NOx comprises: the temperature is 500-800°C, the pressure is 0.02-4MPa, the volumetric hourly space velocity of flue gas is 100-50000 $h^{-1}$. Preferably, the flue gas has a SOx content of 0.001-0.5 vol%, and an NOx content of 0.001-0.3 vol%.

The present inventors discovered during the research that using specific amounts of rare earth metal element(s) (e.g. La) and Group VIII non-precious metal(s) (e.g. Co) in combination with at least one precious metal element (such as Pt) as active components with a specific ratio of rare earth metal(s) to Group VIII non-noble metal(s) can effectively reduce the emissions of SOx and NOx in flue gas at the same time. On this basis, the introduction of Group IIA metal components (e.g. Mg) and/or the introduction of Group VIIB metal components (e.g. Mn) can further improve the ability of the catalyst to remove NOx and SOx in combination. When contacting the catalyst of the present invention with $SO_2$, it is believed that the sulfur element can be converted into different valence states, in which the low-valence sulfur element is beneficial to the conversion of NOx in the flue gas, so that the entire process can promote the conversion of SOx and NOx in a direction that is conducive to reducing the pollution.

The catalyst provided by the invention is simply prepared and easy to implement, and can effectively reduce the emissions of SOx and NOx in the catalytic cracking regeneration flue gas.

**Detailed Description of the Invention**

The endpoints of ranges and any values disclosed herein are not limited to such precise ranges or values. Still, these ranges or values should be understood to include values approaching such ranges or values. For numerical ranges, a combination between any two of the endpoint values of ranges, a combination between one of the endpoint values of ranges and an individual point value, or a combination between any two of individual point values can be made to obtain one or more new numerical ranges. These numerical ranges shall be deemed to be specifically disclosed herein.

In the present invention, unless otherwise stated, pressure refers to gauge pressure.

In the present invention, the catalyst capable of simultaneously reducing SOx and NOx in flue gas means that the catalyst can be used to simultaneously remove SOx and NOx in flue gas and reduce the contents of SOx and NOx in flue gas.

In the present invention, SOx refers to a mixture of sulfur oxides (e.g. a mixture of $SO_2$ and SO3, the molar ratio of oxides is not particularly limited, e.g. 1:10 to 10:1), NOx refers to a mixture of nitrogen oxides (e.g. a mixture of NO2 and NO, the molar ratio of oxides is not particularly limited, e.g. 1:10 to 10: 1).

In the present invention, expressions such as "catalyst for reducing the emission of NOx and SOx in flue gas", "catalyst for (simultaneously) reducing NOx and SOx emissions in flue gas", "desulfurization and denitrification catalyst", "catalyst capable of simultaneously reducing SOx and NOx in flue gas", "catalyst for simultaneously reducing both SOx and NOx in flue gas" have the same meaning, which means that these catalysts can be used to simultaneously remove SOx and NOx in flue gas and reduce the contents of SOx and NOx in flue gas.

According to the first aspect of the present invention, the present invention provides a catalyst for reducing the emission of NOx and SOx in flue gas, the catalyst comprises a support and, loaded on the support, a first active component selected from rare earth metals, a second active component selected from Group VIII non-precious metals and a precious metal component; based on the total weight of the catalyst, the content of the support is 25-95 wt%, the content of the first active component as oxide is 4-60 wt%, the content of the second active component (as_oxide) is 2-12 wt%, and the content of the precious metal component as element is 0.01-2 wt%;

as metal oxides, the molar ratio of the first active component to the second active component is (0.5-15):1, e.g. (1-10): 1, or (1-6):1, (2-5):1, or (2.5-3.5):1, or (2.6-3.4):1, or (2.7-3.3):1, or (2.8-3.2):1, or (2.9-3.1):1, or (2.95-3.05):1.

In the catalyst provided by the invention, the support can be selected in a relatively wide range. Preferably, the support is at least one of alumina, silica-alumina, zeolite, spinel, kaolin, diatomaceous earth, perlite, and perovskite, further preferably alumina.

The present invention has no special limitation on the crystal form of alumina, including but not limited to γ-alumina, δ-alumina, η-alumina, p-alumina, κ-alumina and χ-alumina. According to the present invention, conventionally defined Group rare earth components are used in the present invention, the first active component is La and/or Ce, preferably La.

This method can further improve the SOx and NOx removal performance of the catalyst. The second active component can be at least one of Group VIII metals, preferably Co and/or Fe, more preferably Co.

According to the present invention, the precious metal has a conventional meaning in the art. Preferably, the precious metal component is one or more of Pt, Pd and Rh, most preferably Pd. The present inventors discovered during the research that using the precious metal element Pd and other active components in combination can greatly improve the removal effect of SOx and NOx in flue gas.

According to the present invention, the first active component and the second active component are used in the molar ratio of (0.5-15): 1. At the special ratio, the first active component and the second active component synergize to improve the removal effect of SOx and NOx in flue gas.

According to a preferable embodiment of the present invention, as metal oxides, the molar ratio of the first active component to the second active component is (1-10): 1, preferably (2-5): 1. The effect of the catalyst in removing SOx and NOx in flue gas can be further improved by optimizing the ratio of the first active component to the second active component.

According to a preferable embodiment of the present invention, based on the total weight of the catalyst, the content of the support is 40-90 wt%, the content of the first active component as oxide is 8-50 wt%, the content of the second active component (as_oxide) is 2-12 wt%, and the content of the precious metal component as element is 0.02-1.5 wt%. Preferably, based on the total weight of the catalyst, the content of the support is 50-88 wt%, the content of the first active component as oxide is 8-40 wt%, the content of the second active component (as_oxide) is 2-10 wt%, and the content of the precious metal component as element is 0.03-1.2 wt%.

According to the second aspect of the present invention, the present invention provides a desulfurization and denitrification catalyst, based on the total weight of the catalyst, which comprises by weight percent:

as oxide: 25-92 wt% of inorganic oxide matrix, 6-70 wt% of rare earth metal component, 1-12 wt% of non-precious metal component(s) selected from Groups VB, VIII, IB, and IIB, 1-10 wt% of Group VIIB non-precious metal component; and

0.01-1.5 wt% of precious metal component as element.

According to the present invention, preferably, based on the total weight of the catalyst, which comprises by weight percent:

as oxide: 40-85 wt% of inorganic oxide matrix, 12-60 wt% of rare earth metal component, 2-10 wt% of non-precious metal component(s) selected from Groups VB, VIII, IB, and IIB, and 1-8 wt% of Group VIIB non-precious metal component;
as element: 0.02-1.2 wt% of precious metal component.
more preferably, based on the total weight of the catalyst, which comprises by weight percent:

as oxide: 45-80 wt% of inorganic oxide matrix, 12-48 wt% of rare earth metal component,
2-8 wt% of non-precious metal component(s) selected from Groups VB, VIII, IB, and IIB, and 2-5 wt% of Group VIIB non-precious metal component;
as element: 0.02-1.0 wt% of precious metal component;
most preferably, based on the total weight of the catalyst, which comprises by weight percent:

as oxide: 50-80 wt% of inorganic oxide matrix, 12-43 wt% of rare earth metal component, 2-5 wt% of non-precious metal component(s) selected from Groups VB, VIII, IB, and IIB, and 2-5 wt% of Group VIIB non-precious metal component;
as element: 0.02-0.05 wt% of precious metal component.

By using the above technical solution, different types of metals are selected for synergistic coordination within a specific content range, so that different types of metals can exert a synergistic effect, and the used amount of precious metal can be reduced and the cost can be reduced.

According to the present invention, all rare earth metal components can be used in the present invention. In order to further improve the SOx and NOx removal performance of the catalyst, preferably the rare earth metal component is one or more of La, Ce, Pr and Nd, more preferably La.

In an embodiment, Group VB non-precious metal component can be one or more of V, Nb and Ta; Group VIII non-precious metal component can be one or more Fe, Co and Ni; Group IB non-precious metal component can be Cu; Group IIB non-precious metal component can be one or more of Zn, Cd and Hg.

In a preferred embodiment, the non-precious metal component(s) selected from Groups VB, VIII, IB, and IIB comprise one or more of Fe, Co, Ni, Cu, Zn and V, more preferably Co. In a preferred embodiment, the Group VIIB non-precious metal component is Mn.

In a preferred embodiment, the precious metal component is one or more of Ru, Rh, Re, Pt, Pd, Ag, Ir and Au, more preferably one or more of Pt, Pd and Rh, most preferably Pd.

According to the desulfurization and denitrification catalyst obtained from the preparation of the present invention, the inorganic oxide matrix comprises various inorganic oxide matrices conventionally used in the art, and is for example one or more of alumina, silica-alumina, zeolite, spinel, kaolin, diatomaceous earth, perlite and perovskite. In the present invention, the spinel can be various spinels conventionally used in the art, for example one or more of magnesia-alumina spinel, ZnO-alumina spinel and titania-alumina spinel.

In a preferred embodiment of the present invention, the inorganic oxide matrix is alumina. In a preferred embodiment, alumina is one or more of γ-alumina, δ-alumina, η-alumina, ρ-alumina, κ-alumina and χ-alumina, the present invention has no special limitation thereto. In a preferred embodiment of the present invention, as metal element, the molar ratio of the rare earth metal component to the non-precious metal component(s) selected from Groups VB, VIII, IB, and IIB is (0.6-18):1, further preferably (2-12):1, further more preferably (3-6):1, e.g. (1-10):1, or (1-6):1, (2-5):1, or (2.5-3.5):1, or (2.6-3.4):1, or (2.7-3.3):1, or (2.8-3.2):1, or (2.9-3.1):1, or (2.95-3.05):1.

In a particularly preferabe embodiment of the present invention, based on the total weight of the catalyst, by weight percent, alumina: 50-80 wt%, as oxide, La 12-43 wt%, Co 2-5 wt%, Mn 2-5 wt%; as element, Pd 0.02-0.05 wt%; more preferably, the molar ratio of La:Co is (3-6):1 or (1-6):1, (2-5): 1, or (2.5-3.5): 1, or (2.6-3.4):1, or (2.7-3.3): 1, or (2.8-3.2):1, or (2.9-3.1):1, or (2.95-3.05):1.

The present inventors discovered during the research that in a particularly preferable embodiment, selecting the rare earth metal element La and the non-precious metal elements containing Co and Mn together with at least one element of the precious metal elements as the active component and using the active component in the desulfurization and denitrification catalyst can be particularly effective in reducing the emission of NOx and SOx in flue gas.

According to the third aspect of the present invention, the present invention provides a catalyst capable of/for simultaneously reducing both SOx and NOx in flue gas, the catalyst comprises a support and, loaded on the support, a first active component selected from rare earth metals, a second active component selected from non-precious metals of Groups VB, VIII, IB, and IIB, a third active component selected from Group IIA metals, and a precious metal component; based on the total weight of the catalyst, the content of the support is 25-93 wt%, the content of the first active component as oxide is 4-60 wt%, the content of the second active component (as_oxide) is 2-30 wt%, the content of the third active component (as_oxide) is 1-30 wt%, and the content of the precious metal component as element is 0.01-2 wt%.

According to the present invention, conventionally defined rare earth metal components can be used in the present invention. Preferably, the first active component is one or more of La, Ce, Pr and Nd, more preferably La and/or Ce, most preferably La. This manner can further improve the SOx and NOx removal performance of the catalyst.

The Group VB non-precious metal component can be one or more V, Nb and Ta; the Group VIII non-precious metal component can be at least one of Fe, Co and Ni; the Group IB non-precious metal component can be Cu; the Group IIB non-precious metal component can be at least one of Zn, Cd and Hg.

Preferably, the second active component is one or more of Fe, Co, Ni, Cu, Zn, and V, more preferably Co and/or Fe, most preferably Co.

In the present invention, the third active component can be one or more of Be, Mg, Ca, Sr and Ba, more preferably Mg.

The precious metal component can be one or more of Ru, Rh, Re, Pt, Pd, Ag, Ir and Au, preferably one or more of Pt, Pd and Rh, most preferably Pd. The present inventors discovered during the research that using Pd together with other active components in combination is more conducive to removing SOx and NOx in flue gas.

In the catalyst provided by the invention, the support can be selected in a relatively wide range. Preferably, the support is at least one of alumina, silica-alumina, zeolite, spinel, kaolin, diatomaceous earth, perlite, and perovskite, further preferably alumina.

The present invention has no special limitation on the crystal form of alumina, including but not limited to $\gamma$-alumina, $\delta$-alumina, $\eta$-alumina, p-alumina, $\kappa$-alumina and $\chi$-alumina.

According to a preferable embodiment of the present invention, based on the total weight of the catalyst, the content of the support is 40-87 wt%, the content of the first active component as oxide is 8-50 wt%, the content of the second active component (as_oxide) is 3-20 wt%, the content of the third active component (as_oxide) is 1-20 wt%, and the content of the precious metal component as element is 0.02-1.5 wt%;

Preferably, based on the total weight of the catalyst, the content of the support is 45-80 wt%, the content of the first active component as oxide is 8-40 wt%, the content of the second active component (as_oxide) is 3-15 wt%, the content of the third active component (as_oxide) is2-15 wt%, and the content of the precious metal component as element is 0.03-1.2 wt%.

According to the present invention, preferably, as metal oxides, the molar ratio of the first active component to the second active component is (0.4-12): 1, preferably (0.5-8):1, further preferably (1-4): 1, e.g. (1-6): 1, (2-5): 1, or (2.5-3.5): 1, or (2.6-3.4): 1, or (2.7-3.3):1, or (2.8-3.2): 1, or (2.9-3.1):1, or (2.95-3.05): 1. The present inventors discovered during the research that Combining the two at a special ratio can achieve a better synergistic effect and is more conducive to removing SOx and NOx in flue gas.

According to the fourth aspect of the present invention, the present invention provides a catalyst for simultaneously reducing both SOx and NOx in flue gas, which is characterized in that, based on the total weight of the catalyst, the catalyst comprises 25-95 wt% of inorganic oxide matrix; 2-70 wt% of rare earth metal component as oxide; 1-30 wt% of Group IIA metal component as oxide; 1-15 wt% of non-precious metal component(s) selected from Groups VB, VIII, IB, and IIB as oxide; 1-10 wt% of Group VIIB non-precious metal component as oxide; and 0.01-1.5 wt% of precious metal component as element.

According to the present invention, preferably, based on the total weight of the catalyst, the catalyst comprises 40-90 wt% of inorganic oxide matrix; 4-50 wt% of rare earth metal component as oxide; 1-20 wt% of Group IIA metal component as oxide; 2-12 wt% of non-precious metal component(s) selected from Groups VB, VIII, IB, and IIB as oxide; 1-8 wt% of Group VIIB non-precious metal component as oxide; 0.02-1.2 wt% of precious metal component as element; more preferably, based on the total weight of the catalyst, the catalyst comprises 50-80 wt% of inorganic oxide matrix; 4-40 wt% of rare earth metal component as oxide; 2-15 wt% of Group IIA metal component as oxide; 2-10 wt% of non-precious metal component(s) selected from Groups VB, VIII, IB, and IIB as oxide; 2-5 wt% of Group VIIB non-precious metal component as oxide; 0.02-1.0 wt% of precious metal component as element; most preferably, based on the total weight of the catalyst, the catalyst comprises 50-80 wt% of inorganic oxide matrix; 7-38 wt% of rare earth metal component as oxide; 2-8 wt% of Group IIA metal component as oxide; 2-7 wt% of non-precious metal component(s) selected from Groups VB, VIII, IB, and IIB as oxide; 2-5 wt% of Group VIIB non-precious metal component as oxide; 0.02-0.05 wt% of precious metal component as oxide. Based on the above preferable embodiment, using specific contents of the above metals in combination can greatly reduce the used amounts of precious metals and reduce the cost.

According to the present invention, conventionally defined rare earth metal components can be used in the present invention. In order to further improve the SOx and NOx removal performance of the catalyst, the rare earth metal component is preferably one or more of La, Ce, Pr and Nd, more preferably La and/or Ce, most preferably La.

According to the present invention, said Group IIA metal component is one or more of Be, Mg, Ca, Sr and Ba, more preferably Mg.

The Group VB non-precious metal component can be one or more V, Nb and Ta; the Group VIII non-precious metal component can be at least one of Fe, Co and Ni; the Group IB non-precious metal component can be Cu; the Group IIB non-precious metal component can be at least one of Zn, Cd and Hg.

Preferably, the non-precious metal component(s) selected from Groups VB, VIII, IB, and IIB is one or more of Fe, Co, Ni, Cu, Zn, and V, more preferably Co and/or Fe, most preferably Co.

Preferably, the Group VIIB non-precious metal component is Mn.

Preferably, said precious metal component is one or more of Ru, Rh, Re, Pt, Pd, Ag, Ir and Au, more preferably one or more of Pt, Pd and Rh, most preferably Pd.

According to the catalyst provided by the present invention, the inorganic oxide matrix can be various inorganic oxide matrices conventionally used in the art, for example at least one of alumina, silica-alumina, zeolite, spinel, kaolin, diatomaceous earth, perlite, and perovskite. In the present invention, the spinel can be various spinels conventionally used in the art, and for example can be at least one of magnesia-alumina spinel, ZnO-alumina spinel and titania-alumina spinel.

According to a preferable embodiment of the present invention, the inorganic oxide matrix is alumina.

In the present invention, alumina can be one or more of $\gamma$-alumina, $\delta$-alumina, $\eta$-alumina, p-alumina, $\kappa$-alumina and $\chi$-alumina. The present invention has no special limitation thereto.

According to a preferable embodiment of the present invention, as metal element, the molar ratio of the rare earth metal component to the non-precious metal component(s) selected from Groups VB, VIII, IB, and IIB is (0.4-18):1, further preferably (0.5-12):1, further more preferably (1-6): 1, e.g. (2-5):1, or (2.5-3.5):1, or (2.6-3.4):1, or (2.7-3.3):1, or (2.8-3.2):1, or (2.9-3.1):1, or (2.95-3.05):1.

According to a particularly preferable embodiment of the present invention, based on the total weight of the catalyst, the catalyst comprises 50-80 wt% of alumina; 7-38 wt% of La as oxide; 2-8 wt% of Mg as oxide; 2-7 wt% of Co as oxide; 2-5 wt% of Mn as oxide; 0.02-0.05 wt% of Pd as element; more preferably, the molar ratio of La:Co is (1-6):1, e.g. (2-5):1, or (2.5-3.5):1, or (2.6-3.4):1, or (2.7-3.3): 1, or (2.8-3.2):1, or (2.9-3.1):1, or (2.95-3.05):1.

The present inventors discovered during the research that using the Group rare earth element La, the Group IIA element Mg, and the transitional non-precious metal elements containing Co and Mn, together with at least one of precious metal elements as active component can be particularly effective in reducing the emission of NOx and SOx in catalytic cracking regeneration flue gas.

According to the fifth aspect of the present invention, the present invention provides a method for preparing a catalyst for reducing the emission of NOx and SOx in flue gas according to the first aspect of the present invention, which method comprises:

(1) providing a precursor solution containing a precursor of a first active component selected from rare earth metals, and a precursor of a second active component selected from Group VIII non-precious metals;
(2) carrying out a coprecipitation reaction between the precursor solution and a coprecipitant, then drying and calcining;
(3) mixing and slurrifying the solid product obtained in step (2) and a support and/or a precursor of a support to produce a slurry, then drying and calcining the slurry;
(4) impregnating the solid product obtained in step (3) with a solution containing a precursor of precious metal component as impregnation solution, then drying and/or calcining.

According to the method of the present invention, the selection ranges for specific types of the first active component, the second active component, the precious metal component and the support have been mentioned in the first aspect above, and will not be described in detail again here.

In the present invention, there is no particular limitation on the method of providing the precursor solution in step (1), as long as the precursors of metal components are mixed evenly. For example, the precursors of metal components can be dissolved in water and stirred thoroughly.

According to the method of the present invention, preferably, the precursor of first active component and the precursor of second active component can be each independently selected from water-soluble salts such as nitrates, chlorides, chlorates and sulfates, preferably nitrates and/or chlorides of metal components.

According to the method of the present invention, preferably, the precursor of the precious metal component is at least one of palladium nitrate, palladium chloride, platinum chlorate and rhodium chloride, preferably palladium nitrate and/or palladium chloride.

According to the present invention, the co-precipitation method is used to carry out the coprecipitation reaction of the precursor solution. The present invention has no particular limitation on the type and amount of the coprecipitant, as long as the coprecipitation reaction can proceed smoothly.

The type of the coprecipitant can be conventionally selected in the art, preferably, the coprecipitant is a carbonate salt, further preferably at least one of ammonium carbonate, potassium carbonate and sodium carbonate, more preferably ammonium carbonate.

In step (2), the coprecipitant can be introduced in the form of solution to carry out a coprecipitation reaction with the precursor solution. The present invention has no particular limitation on the concentration of the solution formed from the precursor solution and the coprecipitant, as long as the concentration of the formed solution is less than the solubility during preparation, thereby ensuring that the coprecipitation reaction can fully occur. Preferably, the coprecipitation reaction is carried out at pH=8-10, preferably 8.5-9.5. The pH of the coprecipitation reaction can be adjusted by adding acids and/or bases, the specific types of which are not particularly limited, for example, ammonia water.

According to the present invention, the method also includes the reaction product obtained by the coprecipitation reaction is subjected to a solid-liquid separation (for example, filtering or centrifugal separation) to produce the solid product, followed by drying and calcining.

Preferably, the condition for calcining in step (2) includes: the temperature is 300-800°C, the time is 1-8h.

In the present invention, the precursor of support can be any substance that can be converted into the support through subsequent calcining. Those skilled in the art can make an appropriate selection based on the specific type of support, which will not be described in detail again here. For example, the precursor of aluminum can be various sols or gels of aluminum, or aluminium hydroxide. The aluminium hydroxide can be at least one of gibbsite, bayerite, nordshandite, diaspore, boehmite and pseudo-boehmite.

According to the method of the present invention, the support is alumina, preferably, before slurrifying, the support and/or the precursor of support are subjected to acidification treatment. The acidification treatment can be performed according to the conventional technical means in the art. Further preferably, the acid used in acidification treatment is hydrochloric acid.

The present invention has a relatively wide selection range for the condition of acidification treatment., preferably, the condition of acidification treatment includes: the acid/alumina ratio is 0.12-0.22:1, the time is 20-40min.

In the present invention, unless otherwise specified, the acid/alumina ratio refers to the mass ratio of hydrochloric acid based on 36 wt% of concentrated hydrochloric acid to the precursor of alumina based on dry basis.

The specific implementation mode of acidification treatment can be as follows: adding the precursor of alumina to water, and slurrifying and dispersing.

According to the present invention, the method of mixing and slurrifying the solid product obtained in step (2), and the support and/or the precursor of support is not particularly limited, and the addition order of the above-mentioned substances is also not limited, as long as the above-mentioned substances and water can be contacted and mixed evenly. According to the method of the present invention, preferably, in step (3), the slurry has a solid content of 7-35 wt%.

According to the method of the present invention, in step (3), the drying is preferably spray drying. In the present invention, the spray drying can be performed according to conventional technical means in the art, and the present invention has no special limitation thereto. Those skilled in the art can select an appropriate condition for spray drying based on the average particle size of the target catalyst. The preferred condition for spray drying is such that the particles obtained by spray drying have an average particle size of 60-80 μm with the particle size distribution being mainly in the range of 20-100 μm.

According to the method of the present invention, in step (3), the slurry obtained after mixing and slurrifying may be calcined, preferably, in step (3), the condition for calcining includes: the temperature is 300-800°C, the time is 1-5h.

According to the method of the present invention, in step (4), the impregnation is not particularly limited, and can be carried out according to conventional technical means in the art. It can be saturation impregnation or over-impregnation, preferably over-impregnation. Those skilled in the art can select appropriate operations based on the content of precious metal in the target product.

According to the present invention, preferably, in step (4), the precursor of precious metal component is hydrolyzed in an acid solution to provide the impregnation solution. Specifically, after the hydrolysis, the dilution (e.g. by adding water) or the concentration (e.g. by evaporation), and then the impregnation can be performed to provide a catalyst with a specific loading amount of the precious metal component.

Preferably, the acid is selected from water-soluble inorganic acids and/or organic acids, preferably at least one of hydrochloric acid, nitric acid, phosphoric acid, and acetic acid.

According to the present invention, preferably, the acid is used in such an amount that the pH value of the impregnation solution is less than 5.0, preferably 2-5. Adopting this preferred embodiment is more conducive to the uniform dispersion of active components and can improve the wear resistance of the finished catalyst.

In the present invention, the solid product can be obtained by filtering the mixture obtained after impregnation. The filtering can be carried out according to conventional technical means in the art.

According to the present invention, in step (4), the solid product can be only dried, or only calcined, or dried and then calcined, and the present invention has no special limitation thereto. Preferably, the solid product is dried and then calcined.

The drying conditions in step (2), step (3) and step (4) of the present invention are not particularly limited and the drying can be carried out according to conventional technical means in the art. For example, the conditions for drying can each independently include: the temperature is 60-200°C, the time is 2-10h.

The present invention has no special limitation on the condition for calcining, and the calcining can be carried out according to conventional technical means in the art. The calcining can be performed in an air or inert atmosphere (including but not limited to nitrogen), preferably, the condition for calcining in step (4) includes: the temperature is 300-700°C, the time is 0.1-5h.

According to the sixth aspect of the present invention, the present invention provides a method for preparing the desulfurization and denitrification catalyst according to the second aspect of the present invention, which method comprises the steps of:

> S1. Preparation of active metal precursor: using the co-precipitation method or the sol-gel method;
>
> S2. Preparation of semi-finished catalyst product: mixing and slurrifying an active metal precursor and an inorganic oxide matrix and/or a precursor of inorganic oxide matrix and optionally a precursor of precious metal component to produce a slurry, drying and calcining the slurry;
>
> the method also optionally comprises: S3. impregnating the semi-finished catalyst product obtained in step S2 with a solution containing a precursor of precious metal component as impregnation solution to produce a solid product, and drying and calcining the solid product;
>
> wherein the active metal in the active metal precursor comprises a rare earth metal component, non-precious metal component(s) selected from Groups VB, VIII, IB, and IIB, and a Group VIIB non-precious metal component;
>
> the active metal precursor, the inorganic oxide matrix and/or the precursor of inorganic oxide matrix, and the precursor of precious metal component are used in such amounts that the prepared catalyst, based on the total weight of the catalyst, comprises by weight percent: as oxide: 25-92 wt% of inorganic oxide matrix, 6-70 wt% of rare earth metal component, 1-12 wt% of non-precious metal component(s) selected from Groups VB, VIII, IB, and IIB, 1-10 wt% of Group VIIB non-precious metal component; and
>
> 0.01-1.5 wt% of precious metal component as element.

According to the present invention, preferably, the active metal precursor, the inorganic oxide matrix and/or the precursor of inorganic oxide matrix, and the precursor of precious metal component are used in such amounts that the prepared catalyst, based on the total weight of the catalyst, comprises by weight percent:

> as oxide: 40-85 wt% of inorganic oxide matrix, 12-60 wt% of rare earth metal component, 2-10 wt% of non-precious metal component(s) selected from Groups VB, VIII, IB, and IIB, and 1-8 wt% of Group VIIB non-precious metal component;
>
> as element: 0.02-1.2 wt% of precious metal component;
>
> preferably, the active metal precursor, the inorganic oxide matrix and/or the precursor of inorganic oxide matrix, and the precursor of precious metal component are used in such amounts that the prepared catalyst, based on the total weight of the catalyst, comprises by weight percent:
>
> > as oxide: 45-80 wt% of inorganic oxide matrix, 12-48 wt% of rare earth metal component, 2-8 wt% of non-precious metal component(s) selected from Groups VB, VIII, IB, and IIB, and 2-5 wt% of Group VIIB non-precious metal component;
> >
> > as element: 0.02-1.0 wt% of precious metal component;
> >
> > most preferably, the active metal precursor, the inorganic oxide matrix and/or the precursor of inorganic oxide matrix, and the precursor of precious metal component are used in such amounts that the prepared catalyst, based on the total weight of the catalyst, comprises by weight percent:
> >
> > > as oxide: 50-80 wt% of inorganic oxide matrix, 12-43 wt% of rare earth metal component, 2-5 wt% of non-precious metal component(s) selected from Groups VB, VIII, IB, and IIB, and 2-5 wt% of Group VIIB non-precious metal component;
> > >
> > > as element: 0.02-0.05 wt% of precious metal component.

Preferably, in said active component precursor, as metal element, the molar ratio of the rare earth metal component to the non-precious metal component(s) selected from Groups VB, VIII, IB, and IIB is (0.6-18):1, further preferably (2-12): 1, further more preferably (3-6):1, e.g. (1-10): 1, or (1-6): 1, (2-5): 1, or (2.5-3.5): 1, or (2.6-3.4): 1, or (2.7-3.3): 1, or (2.8-3.2): 1, or (2.9-3.1):1, or (2.95-3.05):1.

According to the preparation method of the present invention, the selection ranges for specific types of the rare earth metal component, the non-precious metal component(s) selected from Groups VB, VIII, IB, and IIB, the Group VIIB non-precious metal component, the precious metal component, and the inorganic oxide matrix have been mentioned in the second aspect above, and will not be described in detail again here.

According to the preparation method of the present invention, either a co-precipitation method may be used, or a sol-gel method may be used. More preferably, the co-precipitation method is used. In step S1, the co-precipitation method is used to produce an active metal precursor.

Preferably, the co-precipitation method comprises:

S11. Preparing a first solution containing a precursor of rare earth metal component, a precursor of non-precious metal component(s) selected from Groups VB, VIII, IB, and IIB, and a precursor of Group VIIB non-precious metal component;
S12. Subjecting a first solution and a coprecipitant to carry out a coprecipitation reaction;
S13. Drying and/or calcining a solid product obtained in the coprecipitation reaction.

In the present invention, there is no particular limitation on the method of producing the first solution in step S11, as long as the precursors of metal components are mixed evenly. For example, the precursors of metal components in step S11 can be dissolved in water and stirred thoroughly.

According to the present invention, preferably, the precursor of rare earth metal component, the precursor of non-precious metal component(s) selected from Groups VB, VIII, IB, and IIB, the precursor of Group VIIB non-precious metal component, and the precursor of precious metal component can be each independently selected from water-soluble salts such as nitrates, chlorides, chlorates and sulfates, preferably nitrates and/or chlorides of metal components. Further preferably, the precursor of Mn is potassium permanganate and/or manganese chloride.

The present invention has no particular limitation on the type and amount of the coprecipitant, as long as the coprecipitation reaction can proceed smoothly. The coprecipitant can be those conventionally selected in the art, preferably, the coprecipitant is a carbonate salt, further preferably one or more of ammonium carbonate, potassium carbonate, and sodium carbonate, more preferably ammonium carbonate.

In step S12, the coprecipitant can be introduced in the form of solution to carry out a coprecipitation reaction with the first solution. The present invention has no particular limitation on the concentration of the solution formed from the first solution and the coprecipitant, as long as the concentration of the formed solution is less than the solubility during preparation, thereby ensuring that the coprecipitation reaction can fully occur. Preferably, the coprecipitation reaction is carried out at pH=8-10, preferably 8.5-9.5. The pH of the coprecipitation reaction can be adjusted by adding acids and/or bases, the specific types of which are not particularly limited, for example, ammonia water.

According to the present invention, the method also includes the reaction product obtained by the coprecipitation reaction is subjected to a solid-liquid separation to produce the solid product. The present invention has no limitation on the solid-liquid separation method, as long as the solid-liquid separation of the reaction product can be fulfilled. For example, the solid-liquid separation method can be filtering or centrifugation.

Preferably, the condition for drying in step S13 includes: the temperature is 60-300°C, the time is 0.5-6h.

Preferably, the condition for calcining in step S13 includes: the temperature is 300-800°C, the time is 1-8h.

According to the present invention, the precious metal component may be introduced in step S2, or in step S3, or a part thereof is introduced in step S2 and the other part is introduced in step S3. Preferably it is introduced in step S3, and this preferable embodiment is more conducive to the dispersion of precious metal.

In the present invention, the precursor of inorganic oxide matrix can be any substance that can be converted into the oxide matrix through subsequent calcining. Those skilled in the art can make an appropriate selection based on the specific type of inorganic oxide matrix, which will not be described in detail again here. For example, the precursor of aluminum can be various sols or gels of aluminum, or aluminium hydroxide. The aluminium hydroxide can be one or more of gibbsite, bayerite, nordshandite, diaspore, boehmite, and pseudo-boehmite. Most preferably, the precursor of alumina is pseudo-boehmite.

According to the preparation method provided by the present invention, the inorganic oxide matrix is alumina, preferably, before slurrifying, the inorganic oxide matrix and/or the precursor of inorganic oxide matrix need to be subjected to acidification treatment. The acidification treatment can be performed according to the conventional technical means in the art. Further preferably, the acid used in acidification treatment is hydrochloric acid.

The present invention has a relatively wide selection range for the condition of acidification treatment, preferably, the condition of acidification treatment includes: the acid/alumina ratio is (0.12-0.22): 1, the time is 20-40min.

In the present invention, unless otherwise specified, the acid/alumina ratio refers to the mass ratio of hydrochloric acid based on 36 wt% of concentrated hydrochloric acid to the precursor of alumina based on dry basis.

The specific implementation mode of acidification treatment can be as follows: adding the precursor of alumina to water, and slurrifying and dispersing.

According to the present invention, the method of mixing and slurrifying the active metal precursor, and the inorganic oxide matrix and/or the precursor of inorganic oxide matrix and optionally the precursor of precious metal component is not particularly limited, and the addition order of the active metal precursor, and the inorganic oxide matrix and/or the precursor of inorganic oxide matrix and optionally the precursor of precious metal component is also not limited, as long as the active metal precursor, and the inorganic oxide matrix and/or the precursor of inorganic oxide matrix and optionally the precursor of precious metal component, and water can be contacted. In case that the slurrifying process further involves the precursor of precious metal component, the specific mixing and slurrifying process may include: adding the precursor of precious metal component (which can be introduced in form of solution) to the acidified inorganic oxide matrix and then mixing and slurrifying, then adding the active metal precursor, and then drying and/or calcining the slurry to produce the finished catalyst.

According to the present invention, preferably, in step S2, the slurry has a solid content of 5-40 wt%.

In step S2, the drying is preferably spray drying. In the present invention, the spray drying can be performed according to conventional technical means in the art, and the present invention has no special limitation thereto. Those skilled in the art can select an appropriate condition for spray drying based on the average particle size of the target catalyst. The preferred condition for spray drying is such that the particles obtained by spray drying have an average particle size of 60-80 μm with the particle size distribution being mainly in the range of 20-100 μm.

Preferably, in step S2, the condition for calcining includes: the temperature is 300-800°C, the time is 1-5h.

According to the preparation method of the present invention, in step S3, the impregnation can be carried out according to conventional technical means in the art. The present invention has no special limitation thereto. For example, the impregnation can be saturation impregnation or over-impregnation, preferably over-impregnation.

According to the present invention, preferably, in step S3, the precursor of precious metal component is hydrolyzed in an acid solution to provide the impregnation solution. Specifically, after the hydrolysis, the dilution (e.g. by adding water) or the concentration (e.g. by evaporation), and then the impregnation can be performed to provide a desulfurization and denitrification catalyst with a specific loading amount of the precious metal component.

Preferably, the acid is selected from water-soluble inorganic acids and/or organic acids, preferably one or more of hydrochloric acid, nitric acid, phosphoric acid, and acetic acid. According to the present invention, preferably, the acid is used in such an amount that the pH value of the impregnation solution is less than 6.0, preferably less than 5. Adopting this preferred embodiment is more conducive to the uniform dispersion of active components and can improve the wear resistance of the finished catalyst.

In the present invention, the solid product can be obtained by filtering the mixture obtained after impregnation. The filtering can be carried out according to conventional technical means in the art.

According to present invention, in step S3, the solid product can be only dried, or only calcined, or dried and then calcined, and the present invention has no special limitation thereto. Preferably, the solid product is dried and then calcined. The present invention has no special limitation on the conditions for drying and calcining, and drying and calcining can be carried out according to conventional technical means in the art. For example, the condition for drying can include: the temperature is 60-150°C, the time is 2-10h. The present invention has no special limitation on the condition for calcining. The calcining can be performed in an air or inert atmosphere (e.g. nitrogen), and the present invention has no special limitation thereto. Preferably, the condition for calcining in step S3 is: the temperature is 300-800°C, the time is 0.1-5h.

According to the seventh aspect of the present invention, the present invention provides a method for preparing a catalyst capable of simultaneously reducing SOx and NOx in flue gas according to the third aspect of the present invention, which method comprises the steps of:

(1) providing a precursor solution containing a precursor of a first active component selected from rare earth metals, a precursor of a second active component selected from non-precious metals of Groups VB, VIII, IB, and IIB, and a precursor of a third active component selected from Group IIA metals;

(2) carrying out a coprecipitation reaction between the precursor solution and a coprecipitant, then drying and calcining;

(3) mixing and slurrifying the solid product obtained in step (2) and a support and/or a precursor of a support and optionally a precursor of precious metal component to produce a slurry, then drying and calcining the slurry;

the method also optionally comprises: (4) impregnating the solid product obtained in step (3) with a solution containing a precursor of precious metal component as impregnation solution, then drying and/or calcining;

the precursor of first active component, the precursor of second active component, the precursor of third active component, the support and/or the precursor of support, and the precursor of precious metal component are used in such amounts that in the prepared catalyst, based on the total weight of the catalyst, the content of the support is 25-93 wt%, the content of the first active component as oxide is 4-60 wt%, the content of the second active component (as_oxide) is 2-30 wt%, the content of the third active component (as_oxide) is 1-30 wt%, and the content of the precious metal component as element is 0.01-2 wt%.

According to the method of the present invention, preferably, the precursor of first active component, the precursor of second active component, the precursor of third active component, the support and/or the precursor of support, and the precursor of precious metal component are used in such amounts that in the prepared catalyst, based on the total weight of the catalyst, the content of the support is 40-87 wt%, the content of the first active component as oxide is 8-50 wt%, the content of the second active component (as_oxide) is 3-20 wt%, the content of the third active component (as_oxide) is 1-20 wt%, and the content of the precious metal component as element is 0.02-1.5 wt%; preferably, the precursor of first active component, the precursor of second active component, the precursor of third active component, the support and/or the precursor of support, and the precursor of precious metal component are used in such amounts that in the prepared catalyst, based on the total weight of the catalyst, the content of the support is 45-80 wt%, the content of the first active component as oxide is 8-40 wt%, the content of the second active component (as_oxide) is 3-15 wt%, the content of the third active component (as_oxide) is2-15 wt%, and the content of the precious metal component as element is 0.03-1.2 wt%.

According to the method of the present invention, the selection ranges for specific types of the first active component, the second active component, the third active component and the precious metal component and the support have been mentioned in the third aspect above, and will not be described in detail again here.

According to a preferable embodiment of the present invention, as metal element, the molar ratio of the precursor of first active component to the precursor of second active component is (0.4-12): 1, preferably (0.5-8): 1, further preferably (1-4): 1.

In the present invention, there is no particular limitation on the method of providing the precursor solution in step (1), as long as the precursors of metal components are mixed evenly. For example, the precursors of metal components may be dissolved in water and stirred thoroughly.

According to the present invention, preferably, the precursor of first active component, the precursor of second active component and the precursor of third active component can be each independently selected from water-soluble salts such as nitrates, chlorides, chlorates and sulfates, preferably nitrates and/or chlorides of metal components.

According to the present invention, preferably, the precursor of the precious metal component is at least one of palladium nitrate, palladium chloride, platinum chlorate and rhodium chloride, preferably palladium nitrate and/or palladium chloride.

The present invention has no particular limitation on the type and amount of the coprecipitant, as long as the coprecipitation reaction can proceed smoothly.The type of the coprecipitant can be conventionally selected in the art, preferably, the coprecipitant is a carbonate salt, further preferably at least one of ammonium carbonate, potassium carbonate and sodium carbonate, more preferably ammonium carbonate.

In step (2), the coprecipitant can be introduced in the form of solution to carry out a coprecipitation reaction with the precursor solution. The present invention has no particular limitation on the concentration of the solution formed from the precursor solution and the coprecipitant, as long as the concentration of the formed solution is less than the solubility during preparation, thereby ensuring that the coprecipitation reaction can fully occur.

Preferably, the coprecipitation reaction is carried out at pH=8-10, preferably 8.5-9.5. The pH of the coprecipitation reaction can be adjusted by adding acids and/or bases, the specific types of which are not particularly limited, for example, ammonia water.

According to the present invention, the method also includes the reaction product obtained by the coprecipitation reaction is subjected to a solid-liquid separation (for example, filtering or centrifugal separation) to produce the solid product, followed by drying and calcining.

According to the present invention, the precious metal component may be introduced in step (3), or in step (4), or a part thereof is introduced in step (3) and the other part is introduced in step (4). Preferably it is introduced in step (4), and this preferable embodiment is more conducive to the dispersion of precious metal.

The support precursor can be any substance that can be converted into the support through subsequent calcining. Those skilled in the art can make an appropriate selection based on the specific type of support, which will not be described in detail again here.For example, the precursor of aluminum can be various sols or gels of aluminum, or aluminium hydroxide. The aluminium hydroxide can be at least one of gibbsite, bayerite, nordshandite, diaspore, boehmite and pseudo-boehmite.

According to the method of the present invention, the support is alumina, preferably, before slurrifying, the support and/or the precursor of support are subjected to acidification treatment. The acidification treatment can be performed according to the conventional technical means in the art. Further preferably, the acid used in acidification treatment is hydrochloric acid.

The present invention has a relatively wide selection range for the condition of acidification treatment., preferably, the condition of acidification treatment includes: the acid/alumina ratio is 0.12-0.22:1, the time is 20-40min.

In the present invention, unless otherwise specified, the acid/alumina ratio refers to the mass ratio of hydrochloric acid based on 36 wt% of concentrated hydrochloric acid to the precursor of alumina based on dry basis.

The specific implementation mode of acidification treatment can be as follows: adding the precursor of alumina to water, and slurrifying and dispersing.

According to the present invention, the method of mixing and slurrifying the solid product obtained in step (2), and the support and/or the precursor of support, and optionally the precursor of precious metal component is not particularly limited, and the addition order of the above-mentioned substances is also not limited, as long as the above-mentioned substances and water can be contacted and mixed evenly. In case that the slurrifying process further involves the precursor of precious metal component, the specific mixing and slurrifying process may include: adding the precursor of precious metal component (which can be introduced in form of solution) to the acidified support and then mixing and slurrifying, then adding the solid product obtained in step (2), and then drying and/or calcining the slurry.

According to the present invention, preferably, in step (3), the slurry has a solid content of 6-38 wt%.

According to the method of the present invention, in step (3), the drying is preferably spray drying, In the present invention, the spray drying can be performed according to conventional technical means in the art, and the present invention has no special limitation thereto. Those skilled in the art can select an appropriate condition for spray drying based on the average particle size of the target catalyst. The preferred condition for spray drying is such that the particles obtained by spray drying have an average particle size of 60-80 $\mu$m with the particle size distribution being mainly in the range of 20-100 $\mu$m.

According to the method of the present invention, in step (4), the impregnation is not particularly limited and can be carried out according to conventional technical means in the art. The impregnation can be saturation impregnation or over-impregnation, preferably over-impregnation. Those skilled in the art can select appropriate operations based on the content of precious metal in the target product.

According to the present invention, preferably, in step (4), the precursor of precious metal component is hydrolyzed in an acid solution to provide the impregnation solution. Specifically, after the hydrolysis, the dilution (e.g. by adding water) or the concentration (e.g. by evaporation), and then the impregnation can be performed to provide a catalyst with a specific loading amount of the precious metal component.

Preferably, the acid is selected from water-soluble inorganic acids and/or organic acids, preferably at least one of hydrochloric acid, nitric acid, phosphoric acid, and acetic acid.

According to the present invention, preferably, the acid is used in such an amount that the pH value of the impregnation solution is less than 6.0, preferably 2-5. Adopting this preferred embodiment is more conducive to the uniform dispersion of active components and can improve the wear resistance of the finished catalyst.

In the present invention, the solid product can be obtained by filtering the mixture obtained after impregnation. The filtering can be carried out according to conventional technical means in the art.

According to the present invention, in step (4), the solid product can be only dried, or only calcined, or dried and then calcined, and the present invention has no special limitation thereto. Preferably, the solid product is dried and then calcined. The present invention has no special limitation on the conditions for drying and calcining, and drying and calcining can be carried out according to conventional technical means in the art. For example, the condition for drying can include: the temperature is 60-200°C, the time is 2-10h.

According to the method of the present invention, each step may have the same or different condition for calcining, preferably, in step (2), step (3) and step (4), the conditions for calcining may each independently include: the temperature is 300-800°C, the time is 0.5-8h. The calcining can be carried out in air or an inert atmosphere (e.g. nitrogen). The present invention has no special limitation thereto. Preferably the calcining is carried out in an air atmosphere.

According to the eighth aspect of the present invention, the present invention provides a method for preparing a catalyst for simultaneously reducing both SOx and NOx in flue gas according to the fourth aspect of the present invention, which method comprises the steps of:

(1) a co-precipitation method or a sol-gel method is used to produce an active metal precursor;
(2) mixing and slurrifying an active metal precursor and an inorganic oxide matrix and/or a precursor of inorganic oxide matrix and optionally a precursor of precious metal component to produce a slurry, drying and/or calcining the slurry to produce a composition; the method also optionally comprises: (3) impregnating the composition obtained in step (2) with a solution containing a precursor of precious metal component as impregnation solution to produce a solid product, and then drying and/or calcining the soild product;

wherein the active metal in the active metal precursor comprises rare earth metal component, Group IIA metal component, non-precious metal component(s) selected from Groups VB, VIII, IB, and IIB, and Group VIIB non-precious metal component;
the active metal precursor, the inorganic oxide matrix and/or the precursor of inorganic oxide matrix, and the precursor of precious metal component are used in such amounts that the prepared catalyst, based on the total weight of the catalyst, comprises 25-95 wt% of inorganic oxide matrix; 2-70 wt% of rare earth metal component as oxide; 1-30 wt% of Group IIA metal component as oxide; 1-15 wt% of non-precious metal component(s) selected from Groups VB, VIII, IB, and IIB as oxide; 1-10 wt% of Group VIIB non-precious metal component as oxide; and 0.01-1.5 wt% of precious metal component as element.

According to the present invention, preferably, the active metal precursor, the inorganic oxide matrix and/or the precursor of inorganic oxide matrix, and the precursor of precious metal component are used in such amounts that the prepared catalyst, based on the total weight of the catalyst, comprises 40-90 wt% of inorganic oxide matrix; 4-50 wt% of rare earth metal component as oxide; 1-20 wt% of Group IIA metal component as oxide; 2-12 wt% of non-precious metal component(s) selected from Groups VB, VIII, IB, and IIB as oxide; 1-8 wt% of Group VIIB non-precious metal component as oxide; 0.02-1.2 wt% of precious metal component as element; more preferably, the active metal precursor, the inorganic oxide matrix and/or the precursor of inorganic oxide matrix, and the precursor of precious metal component are used in such amounts that the prepared catalyst, based on the total weight of the catalyst, comprises 5-80 wt% of inorganic oxide matrix; 4-40 wt% of rare earth metal component as oxide; 2-15 wt% of Group IIA metal component as oxide; 2-10 wt% of non-precious metal component(s) selected from Groups VB, VIII, IB, and IIB as oxide; 2-5 wt% of Group VIIB non-precious metal component as oxide; 0.02-1.0 wt% of precious metal component as element; most preferably, based on the total weight of the catalyst, comprises 50-80 wt% of inorganic oxide matrix; 7-38 wt% of rare earth metal component as oxide; 2-8 wt% of Group IIA metal component as oxide; 2-7 wt% of non-precious metal component(s) selected from Groups VB, VIII, IB, and IIB as oxide; 2-5 wt% of Group VIIB non-precious metal component as oxide; 0.02-0.05 wt% of precious metal component as oxide.

Preferably, in said active component precursor, as metal element, the molar ratio of the rare earth metal component to the non-precious metal component(s) selected from Groups VB, VIII, IB, and IIB is (0.4-18):1, further preferably (0.5-12):1, further more preferably (1-6):1.

According to the method of the present invention, the selection ranges for specific types of the rare earth metal component, the Group IIA metal component, the non-precious metal component(s) selected from Groups VB, VIII, IB, and IIB, the Group VIIB non-precious metal component and the precious metal component and the inorganic oxide matrix have been mentioned in the fourth aspect above, and will not be described in detail again here. According to the method of the present invention, either a co-precipitation method may be used, or a sol-gel method may be used. More preferably, the co-precipitation method is used. Preferably, in step (1), the co-precipitation method is used to produce the active metal precursor; more preferably, the co-precipitation method comprises:

(1-1) providing a first solution containing a precursor of rare earth metal component, a precursor of Group IIA metal component, a precursor of non-precious metal component(s) selected from Groups VB, VIII, IB, and IIB, and a precursor of Group VIIB non-precious metal component;
(1-2) subjecting the first solution and a coprecipitant to carry out a coprecipitation reaction;
(1-3) drying and/or calcining a solid product obtained in the coprecipitation reaction.

In the present invention, there is no particular limitation on the method of providing the first solution in step (1-1), as long as the precursors of metal components are mixed evenly. For example, the precursors of metal components can be dissolved in water and stirred thoroughly.

According to the present invention, preferably, the precursor of rare earth metal component, the precursor of Group IIA metal component, the precursor of non-precious metal component(s) selected from Groups VB, VIII, IB, and IIB, and the precursor of Group VIIB non-precious metal component can be each independently selected from water-soluble salts such as nitrates, chlorides, chlorates and sulfates, preferably nitrates and/or chlorides of metal components. In particular, the precursor of Mn can be potassium permanganate and/or manganese chloride.

According to the present invention, the precursor of the precious metal component can be any water-soluble compound containing the precious metal component, preferably, the precursor of the precious metal component is at least one of palladium nitrate, palladium chloride, platinum chlorate and rhodium chloride, further preferably palladium nitrate and/or palladium chloride.

The present invention has no particular limitation on the type and amount of the coprecipitant, as long as the coprecipitation reaction can proceed smoothly. The type of the coprecipitant can be conventionally selected in the art, preferably, the coprecipitant is a carbonate salt, further preferably at least one of ammonium carbonate, potassium carbonate and sodium carbonate, more preferably ammonium carbonate.

In step (1-2), the coprecipitant can be introduced in the form of solution to carry out a coprecipitation reaction with the first solution. The present invention has no particular limitation on the concentration of the solution formed from the first solution and the coprecipitant, as long as the concentration of the formed solution is less than the solubility during preparation, thereby ensuring that the coprecipitation reaction can fully occur.

Preferably, the coprecipitation reaction is carried out at pH=8-10, preferably 8.5-9.5. The pH of the coprecipitation reaction can be adjusted by adding acids and/or bases, the specific types of which are not particularly limited, for example, ammonia water.

According to the present invention, the method also includes the reaction product obtained by the coprecipitation reaction is subjected to a solid-liquid separation (for example, filtering or centrifugal separation) to produce the solid product.

Preferably, the condition for drying in step (1-3) includes: the temperature is 60-150°C, the time is 4-12h.

Preferably, the condition for calcining in step (1-3) includes: the temperature is 300-800°C, the time is 1-8h.

According to the present invention, the precious metal component may be introduced in step (2), or in step (3), or a part thereof is introduced in step (2) and the other part is introduced in step (3). Preferably it is introduced in step (3), and this preferable embodiment is more conducive to the dispersion of precious metal.

The precursor of inorganic oxide matrix can be any substance that can be converted into the oxide matrix through subsequent calcining. Those skilled in the art can make an appropriate selection based on the specific type of inorganic oxide matrix, which will not be described in detail again here.

For example, the precursor of aluminum can be various sols or gels of aluminum, or aluminium hydroxide. The aluminium hydroxide can be at least one of gibbsite, bayerite, nordshandite, diaspore, boehmite and pseudo-boehmite. Most preferably, the precursor of alumina is pseudo-boehmite.

According to the preparation method provided by the present invention, the inorganic oxide matrix is alumina, preferably, before slurrifying, the inorganic oxide matrix and/or the precursor of inorganic oxide matrix is subjected to acidification treatment. The acidification treatment can be performed according to the conventional technical means in the art. Further preferably, the acid used in acidification treatment is hydrochloric acid.

The present invention has a relatively wide selection range for the condition of acidification treatment., preferably, the condition of acidification treatment includes: the acid/alumina ratio is 0.12-0.22:1, the time is 20-40min.

In the present invention, unless otherwise specified, the acid/alumina ratio refers to the mass ratio of hydrochloric acid based on 36 wt% of concentrated hydrochloric acid to the precursor of alumina based on dry basis.

The specific implementation mode of acidification treatment can be as follows: adding the precursor of alumina to water, and slurrifying and dispersing.

According to the present invention, the method of mixing and slurrifying the active metal precursor, the inorganic oxide matrix and/or the precursor of inorganic oxide matrix and optionally the precursor of precious metal component is not particularly limited, and the addition order of the active metal precursor, and the inorganic oxide matrix and/or the precursor of inorganic oxide matrix and optionally the precursor of precious metal component is also not limited, as long as the active metal precursor, and the inorganic oxide matrix and/or the precursor of inorganic oxide matrix and optionally the precursor of precious metal component, and water can be contacted. In case that the slurrifying process further involves the precursor of precious metal component, the specific mixing and slurrifying process may include: adding the precursor of precious metal component (which can be introduced in form of solution) to the acidified inorganic oxide matrix and then mixing and slurrifying, then adding the active metal precursor, and then drying and/or calcining the slurry to produce the finished catalyst.

According to the present invention, preferably, in step (2), the slurry has a solid content of 5-40 wt%.

In step (2), the drying is preferably spray drying. In the present invention, the spray drying can be performed according to conventional technical means in the art, and the present invention has no special limitation thereto. Those skilled in the art can select an appropriate condition for spray drying based on the average particle size of the target catalyst. The preferred condition for spray drying is such that the particles obtained by spray drying have an average particle size of 60-80 $\mu$m with the particle size distribution being mainly in the range of 20-100 $\mu$m.

Preferably, the condition for calcining in step (2) includes: the temperature is 300-800°C, the time is 1-5h.

According to the preparation method of the present invention, in step (3), the impregnation is not particularly limited and can be carried out according to conventional technical means in the art. The impregnation can be saturation impregnation or over-impregnation, preferably over-impregnation.

According to the present invention, preferably, in step (3), the precursor of precious metal component is hydrolyzed in an acid solution to provide the impregnation solution. Specifically, after the hydrolysis, the dilution (e.g. by adding water) or the concentration (e.g. by evaporation), and then the impregnation can be performed to provide a catalyst with a specific loading amount of the precious metal component.

Preferably, the acid is selected from water-soluble inorganic acids and/or organic acids, preferably at least one of hydrochloric acid, nitric acid, phosphoric acid, and acetic acid.

According to the present invention, preferably, the acid is used in such an amount that the pH value of the impregnation solution is less than 6.0, preferably less than 5.0. Adopting this preferred embodiment is more conducive to the uniform dispersion of active components and can improve the wear resistance of the finished catalyst.

In the present invention, the solid product can be obtained by filtering the mixture obtained after impregnation. The filtering can be carried out according to conventional technical means in the art.

According to the present invention, in step (3), the solid product can be only dried, or only calcined, or dried and then calcined, and the present invention has no special limitation thereto. Preferably, the solid product is dried and then calcined. The present invention has no special limitation on the conditions for drying and calcining, and drying and calcining can be carried out according to conventional technical means in the art. For example, the condition for drying can include: the temperature is 60-150°C, the time is 2-10h. The present invention has no special limitation on the condition for calcining. The calcining can be performed in an air or inert atmosphere (e.g. nitrogen), and the present invention has no special limitation thereto. The condition for calcining in step (3) preferably comprises: the temperature is 300-800°C, the time is 0.1-5h.

According to the method of the present invention, with respect to the method for providing the active metal component precursor, either a co-precipitation method may be used, or a sol-gel method may be used. More preferably, the co-precipitation method is used. However it should be understood that the sol-gel method is also within the protection scope of the present invention.

The catalyst provided by the present invention is suitable for the treatment of any flue gas containing SOx and NOx, and is particularly suitable for removing SOx and NOx in catalytic cracking regeneration flue gas.

Thus according to the ninth aspect of the present invention, the present invention provides a method for simultaneously reducing both SOx and NOx from flue gas, which comprises contacting a flue gas containing SOx and NOx with the catalyst of the present invention in a condition for simultaneously removing SOx and NOx.

According to a preferable embodiment of the present invention, the condition for simultaneously removing SOx and NOx comprises:

the temperature is 500-800°C, e.g. 550-780°C, 550-750°C,
the pressure is 0.01-4MPa, e.g. 0.02-4MPa, 0.02-1MPa, 0.03-2MPa, 0.02-0.1MPa,
the volumetric hourly space velocity of flue gas is 100-50000h$^{-1}$, e.g. 200-20000h$^{-1}$, 500-10000h$^{-1}$.

In the present invention, unless otherwise specified, the pressure is gauge pressure. Preferably, in the flue gas, the SOx content is 0.001-0.5 vol%, 0.002-0.2 vol%, the NOx content is 0.001-0.3 vol%, 0.002-0.2 vol%, 0.001-0.03 vol%.

Preferably, in the flue gas, the volume content ratio of SOx and NOx is 1-1.4:1, preferably 1-1.2:1. This preferred embodiment is more conducive to improving the removal efficiency of both.

The present invention has a relatively wide selection range for the flue gas, and the method of the present invention is suitable for any flue gas containing both SOx and NOx at the same time.

The flue gas (e.g. catalytic cracking regeneration flue gas) may contain the components CO, $CO_2$, and $H_2O$ besides SOx and NOx.

Preferably, the flue gas is a catalytic cracking regeneration flue gas.

In an aspect of the present invention, the present invention provides the following technical solutions:

1. A catalyst for simultaneously reducing both SOx and NOx in flue gas, which is characterized in that, based on the total weight of the catalyst, the catalyst comprises 25-95 wt% of inorganic oxide matrix; 2-70 wt% of rare earth metal component as oxide; 1-30 wt% of Group IIA metal component as oxide; 1-15 wt% of non-precious metal component(s) selected from Groups VB, VIII, IB, and IIB as oxide; 1-10 wt% of Group VIIB non-precious metal component as oxide; and 0.01-1.5 wt% of precious metal component as element.

2. The catalyst according to technical solution 1, wherein, based on the total weight of the catalyst, the catalyst contains 40-90 wt% of inorganic oxide matrix; 4-50 wt% of rare earth metal component as oxide; 1-20 wt% of Group IIA metal component as oxide; 2-12 wt% of non-precious metal component(s) selected from Groups VB, VIII, IB, and IIB as oxide; 1-8 wt% of Group VIIB non-precious metal component as oxide; 0.02-1.2 wt% of precious metal component as element;

preferably, based on the total weight of the catalyst, the catalyst contains 50-80 wt% of inorganic oxide matrix; 4-40 wt% of rare earth metal component as oxide; 2-15 wt% of Group IIA metal component as oxide; 2-10 wt% of non-precious metal component(s) selected from Groups VB, VIII, IB, and IIB as oxide; 2-5 wt% of Group VIIB non-precious metal component as oxide; 0.02-1.0 wt% of precious metal component as element.

3. The catalyst according to technical solution 1, wherein, the rare earth metal component is one or more of La, Ce, Pr and Nd, more preferably La and/or Ce;

said Group IIA metal component is one or more of Be, Mg, Ca, Sr and Ba, more preferably Mg;
the non-precious metal component(s) selected from Groups VB, VIII, IB, and IIB is one or more of Fe, Co, Ni, Cu, Zn, and V, more preferably Co and/or Fe;
the Group VIIB non-precious metal component is Mn;
said precious metal component is one or more of Ru, Rh, Re, Pt, Pd, Ag, Ir and Au, more preferably one or more of Pt, Pd and Rh, most preferably Pd;
the inorganic oxide matrix is at least one of alumina, silica-alumina, zeolite, spinel, kaolin, diatomaceous earth, perlite, and perovskite, preferably alumina.

4. The catalyst according to any one of technical solutions 1-3, wherein, as metal element, the molar ratio of the rare earth metal component to the non-precious metal component(s) selected from Groups VB, VIII, IB, and IIB is (0.4-18):1, further preferably (0.5-12):1, further more preferably (1-6): 1.

5. A method for preparing a catalyst for simultaneously reducing both SOx and NOx in flue gas, which method comprises the steps of:

> (1) a co-precipitation method or a sol-gel method is used to produce an active metal precursor;
> (2) mixing and slurrifying an active metal precursor and an inorganic oxide matrix and/or a precursor of inorganic oxide matrix and optionally a precursor of precious metal component to produce a slurry, drying and/or calcining the slurry to produce a composition; the method also optionally comprises: (3) impregnating the composition obtained in step (2) with a solution containing a precursor of precious metal component as impregnation solution to produce a solid product, and then drying and/or calcining the soild product;
>
> wherein the active metal in the active metal precursor comprises rare earth metal component, Group IIA metal component, non-precious metal component(s) selected from Groups VB, VIII, IB, and IIB, and Group VIIB non-precious metal component;
> the active metal precursor, the inorganic oxide matrix and/or the precursor of inorganic oxide matrix, and the precursor of precious metal component are used in such amounts that the prepared catalyst, based on the total weight of the catalyst, comprises 25-95 wt% of inorganic oxide matrix; 2-70 wt% of rare earth metal component as oxide; 1-30 wt% of Group IIA metal component as oxide; 1-15 wt% of non-precious metal component(s) selected from Groups VB, VIII, IB, and IIB as oxide; 1-10 wt% of Group VIIB non-precious metal component as oxide; and 0.01-1.5 wt% of precious metal component as element.

6. The preparation method according to technical solution 5, wherein the active metal precursor, the inorganic oxide matrix and/or the precursor of inorganic oxide matrix, and the precursor of precious metal component are used in such amounts that the prepared catalyst, based on the total weight of the catalyst, comprises 40-90 wt% of inorganic oxide matrix; 4-50 wt% of rare earth metal component as oxide; 1-20 wt% of Group IIA metal component as oxide; 2-12 wt% of non-precious metal component(s) selected from Groups VB, VIII, IB, and IIB as oxide; 1-8 wt% of Group VIIB non-precious metal component as oxide; 0.02-1.2 wt% of precious metal component as element;

> preferably, the active metal precursor, the inorganic oxide matrix and/or the precursor of inorganic oxide matrix, and the precursor of precious metal component are used in such amounts that the prepared catalyst, based on the total weight of the catalyst, comprises 50-80 wt% of inorganic oxide matrix; 4-40 wt% of rare earth metal component as oxide; 2-15 wt% of Group IIA metal component as oxide; 2-10 wt% of non-precious metal component(s) selected from Groups VB, VIII, IB, and IIB as oxide; 2-5 wt% of Group VIIB non-precious metal component as oxide; 0.02-1.0 wt% of precious metal component as element;
> preferably, in said active component precursor, as metal element, the molar ratio of the rare earth metal component to the non-precious metal component(s) selected from Groups VB, VIII, IB, and IIB is (0.4-18):1, further preferably (0.5-12):1, further more preferably (1-6):1.

7. The preparation method according to technical solution 5 or 6, wherein the rare earth metal component is one or more of La, Ce, Pr and Nd, more preferably La and/or Ce;

> said Group IIA metal component is one or more of Be, Mg, Ca, Sr and Ba, more preferably Mg;
> the non-precious metal component(s) selected from Groups VB, VIII, IB, and IIB is one or more of Fe, Co, Ni, Cu, Zn, and V, more preferably Co and/or Fe;
> the Group VIIB non-precious metal component is Mn;
> said precious metal component is one or more of Ru, Rh, Re, Pt, Pd, Ag, Ir and Au, more preferably one or more of Pt, Pd and Rh, most preferably Pd;
> the inorganic oxide matrix is at least one of alumina, silica-alumina, zeolite, spinel, kaolin, diatomaceous earth, perlite, and perovskite, preferably alumina.

8. The preparation method according to any one of technical solutions 5-7, wherein in step (1), the co-precipitation method is used to produce the active metal precursor; preferably, the co-precipitation method comprises:

> (1-1) providing a first solution containing a precursor of rare earth metal component, a precursor of Group IIA metal component, a precursor of non-precious metal component(s) selected from Groups VB, VIII, IB, and IIB, and a precursor of Group VIIB non-precious metal component;

(1-2) subjecting the first solution and a coprecipitant to carry out a coprecipitation reaction;

(1-3) drying and/or calcining a solid product obtained in the coprecipitation reaction.

9. The preparation method according to technical solution 8, wherein, the precursor of rare earth metal component, the precursor of Group IIA metal component, the precursor of non-precious metal component(s) selected from Groups VB, VIII, IB, and IIB, and the precursor of Group VIIB non-precious metal component can be each independently selected from nitrate and/or chloride of each metal component;

preferably, the coprecipitant is a carbonate salt, further preferably at least one of ammonium carbonate, potassium carbonate and sodium carbonate;

preferably, the coprecipitation reaction is carried out at pH=8-10;

preferably, the condition for calcining in step (1-3) includes: the temperature is 300-800°C, the time is 1-8h.

10. The preparation method according to any one of technical solutions 5-9, wherein, in step (2), the slurry has a solid content of 5-40 wt%;

preferably, the condition for calcining in step (2) includes: the temperature is 300-800°C, the time is 1-5h.

11. The preparation method according to any one of technical solutions 5-10, wherein, in step (3), the precursor of precious metal component is hydrolyzed in an acid solution to provide the impregnation solution;

preferably, the acid is selected from water-soluble inorganic acids and/or organic acids, preferably at least one of hydrochloric acid, nitric acid, phosphoric acid, and acetic acid;

preferably, the acid is used in such an amount that the pH value of the impregnation solution is less than 6.0, preferably less than 5.0;

preferably, the condition for calcining in step (3) includes: the temperature is 300-800°C, the time is 0.1-5h.

12. Use of the catalyst according to any one of technical solutions 1-4 or the catalyst prepared with the preparation method according to any one of technical solutions 5-11 in simultaneously removing both SOx and NOx in catalytic cracking regeneration flue gas.

13. A method for simultaneously reducing both SOx and NOx from flue gas, which comprises contacting a flue gas containing SOx and NOx with the catalyst according to any one of technical solutions 1-4 or the catalyst prepared with the preparation method according to any one of technical solutions 5-11 under a condition for removing SOx and NOx,

preferably, the condition for removing SOx and NOx includes: the temperature is 500-800°C, the pressure is 0.02-4MPa, the volumetric hourly space velocity of flue gas is 100-50000h$^{-1}$;

preferably, in the flue gas, the SOx content is 0.001-0.5 vol%, the NOx content is 0.001-0.3 vol%;

preferably, the flue gas is a catalytic cracking regeneration flue gas.

In an aspect of the present invention, the present invention provides the following technical solutions:

1. A desulfurization and denitrification catalyst, which is characterized in that, based on the total weight of the catalyst, the catalyst comprises by weight percent:

as oxide: 25-92 wt% of inorganic oxide matrix, 6-70 wt% of rare earth metal component, 1-12 wt% of non-precious metal component(s) selected from Groups VB, VIII, IB, and IIB, 1-10 wt% of Group VIIB non-precious metal component; and
0.01-1.5 wt% of precious metal component as element.

2. The desulfurization and denitrification catalyst according to technical solution 1, wherein, based on the total weight of the catalyst, which comprises by weight percent:

as oxide: 40-85 wt% of inorganic oxide matrix, 12-60 wt% of rare earth metal component, 2-10 wt% of non-precious metal component(s) selected from Groups VB, VIII, IB, and IIB, and 1-8 wt% of Group VIIB non-precious metal component;
as element: 0.02-1.2 wt% of precious metal component;
preferably, based on the total weight of the catalyst, which comprises by weight percent:

as oxide: 45-80 wt% of inorganic oxide matrix, 12-48 wt% of rare earth metal component, 2-8 wt% of non-precious metal component(s) selected from Groups VB, VIII, IB, and IIB, and 2-5 wt% of Group VIIB non-precious metal component;

as element: 0.02-1.0 wt% of precious metal component.

3. The desulfurization and denitrification catalyst according to technical solution 1, wherein, the rare earth metal component is selected from one or more of La, Ce, Pr and Nd, more preferably La;

the non-precious metal component(s) selected from Groups VB, VIII, IB, and IIB is one or more of Fe, Co, Ni, Cu, Zn and V, more preferably Co;
the Group VIIB non-precious metal component is Mn;
the precious metal component is one or more of Ru, Rh, Re, Pt, Pd, Ag, Ir and Au, more preferably one or more of Pt, Pd and Rh, most preferably Pd;
the inorganic oxide matrix is one or more alumina, silica-alumina, zeolite, spinel, kaolin, diatomaceous earth, perlite, and perovskite, preferably alumina.

4. The desulfurization and denitrification catalyst according to any one of technical solutions 1-3, wherein as element, the molar ratio of the rare earth metal component to the non-precious metal component(s) selected from Groups VB, VIII, IB, and IIB is (0.6-18): 1, further preferably (2-12): 1, further more preferably (3-6): 1.

5. A method for preparing a desulfurization and denitrification catalyst, which comprises the steps of:

S1. Preparation of active metal precursor: using the co-precipitation method or the sol-gel method;
S2. Preparation of semi-finished catalyst product: mixing and slurrifying an active metal precursor and an inorganic oxide matrix and/or a precursor of inorganic oxide matrix and optionally a precursor of precious metal component to produce a slurry, drying and calcining the slurry;

the method also optionally comprises: S3. impregnating the semi-finished catalyst product obtained in step S2 with a solution containing a precursor of precious metal component as impregnation solution to produce a solid product, and drying and calcining the solid product;
wherein the active metal in the active metal precursor comprises a rare earth metal component, non-precious metal component(s) selected from Groups VB, VIII, IB, and IIB, and a Group VIIB non-precious metal component;
the active metal precursor, the inorganic oxide matrix and/or the precursor of inorganic oxide matrix, and the precursor of precious metal component are used in such amounts that the prepared catalyst, based on the total weight of the catalyst, comprises by weight percent: as oxide: 25-92 wt% of inorganic oxide matrix, 6-70 wt% of rare earth metal component, 1-12 wt% of non-precious metal component(s) selected from Groups VB, VIII, IB, and IIB, 1-10 wt% of Group VIIB non-precious metal component; and
0.01-1.5 wt% of precious metal component as element.

6. The preparation method according to technical solution 5, wherein the active metal precursor, the inorganic oxide matrix and/or the precursor of inorganic oxide matrix, and the precursor of precious metal component are used in such amounts that the prepared catalyst, based on the total weight of the catalyst, comprises by weight percent:

as oxide: 40-85 wt% of inorganic oxide matrix, 12-60 wt% of rare earth metal component, 2-10 wt% of non-precious metal component(s) selected from Groups VB, VIII, IB, and IIB, and 1-8 wt% of Group VIIB non-precious metal component;
as element: 0.02-1.2 wt% of precious metal component;
preferably, the active metal precursor, the inorganic oxide matrix and/or the precursor of inorganic oxide matrix, and the precursor of precious metal component are used in such amounts that the prepared catalyst, based on the total weight of the catalyst, comprises by weight percent:

as oxide: 45-80 wt% of inorganic oxide matrix, 12-48 wt% of rare earth metal component, 2-8 wt% of non-precious metal component(s) selected from Groups VB, VIII, IB, and IIB, and 2-5 wt% of Group VIIB non-precious metal component;
as element: 0.02-1.0 wt% of precious metal component;
preferably, in said active component precursor, as metal element, the molar ratio of the rare earth metal component to the non-precious metal component(s) selected from Groups VB, VIII, IB, and IIB is (0.6-18):1, further preferably (2-12): 1, further more preferably (3-6):1.

7. The preparation method according to technical solution 5 or 6, wherein the rare earth metal component is selected from one or more of La, Ce, Pr and Nd, more preferably La; the non-precious metal component(s) selected from Groups VB, VIII, IB, and IIB is one or more of Fe, Co, Ni, Cu, Zn and V, more preferably Co;

the Group VIIB non-precious metal component is Mn;
said precious metal component is one or more of Ru, Rh, Re, Pt, Pd, Ag, Ir and Au, more preferably one or more of Pt, Pd and Rh, most preferably Pd;
the inorganic oxide matrix is one or more alumina, silica-alumina, zeolite, spinel, kaolin, diatomaceous earth, perlite, and perovskite, preferably alumina.

8. The preparation method according to any one of technical solutions 5-7, wherein in step S1, the co-precipitation method is used to produce an active metal precursor,
preferably, the co-precipitation method comprises:

S11. Preparing a first solution containing a precursor of rare earth metal component, a precursor of non-precious metal component(s) selected from Groups VB, VIII, IB, and IIB, and a precursor of Group VIIB non-precious metal component;
S12. Subjecting a first solution and a coprecipitant to carry out a coprecipitation reaction;
S13. Drying and/or calcining a solid product obtained in the coprecipitation reaction.

9. The preparation method according to technical solution 8, wherein, the precursor of rare earth metal component, the precursor of non-precious metal component(s) selected from Groups VB, VIII, IB, and IIB, the precursor of Group VIIB non-precious metal component, and the precursor of precious metal component are each independently selected from nitrates and/or chlorides of metal components;

preferably, the coprecipitant is a carbonate salt, preferably one or more of ammonium carbonate, potassium carbonate, and sodium carbonate;
preferably, the coprecipitation reaction is carried out at pH=8-10;
preferably, the condition for calcining in step S13 is: the temperature is 300-800°C, the time is 1-8h.

10. The preparation method according to any one of technical solutions 5-9, wherein, in step S2, the slurry has a solid content of 5-40 wt%;
preferably, the condition for calcining in step S2 is: the temperature is 300-800°C, the time is 1-5h.
11. The preparation method according to any one of technical solutions 5-10, wherein, in step S3, the precursor of precious metal component is hydrolyzed in an acid solution to provide the impregnation solution;

preferably, the acid is a water-soluble inorganic acid and/or organic acid, preferably one or more of hydrochloric acid, nitric acid, phosphoric acid, and acetic acid.
preferably, the acid is used in such an amount that the pH value of the impregnation solution is less than 6.0, preferably less than 5.0;
preferably, the condition for calcining in step S3 is: the temperature is 300-800°C, the time is 0.1-5h.

12. Use of the desulfurization and denitrification catalyst according to any one of technical solutions 1-4 or the desulfurization and denitrification catalyst prepared with the preparation method according to any one of technical solutions 5-11 in simultaneously removing both SOx and NOx in flue gas.
13. Use according to technical solution 12, wherein the desulfurization and denitrification catalyst is contacted with a flue gas containing SOx and NOx;

wherein the condition for removing SOx and NOx is: the temperature is 500-800°C, the pressure is 0.02-4MPa, the volumetric hourly space velocity of flue gas is 100-50000h$^{-1}$;
preferably, the flue gas has a SOx content of 0.001-0.5 vol%, and an NOx content of 0.001-0.3 vol%;
preferably, the flue gas is a catalytic cracking regeneration flue gas.

In an aspect of the present invention, the present invention provides the following technical solutions:

1. A catalyst for reducing the emission of NOx and SOx in flue gas, the catalyst comprises a support and, loaded on the support, a first active component selected from rare earth metals, a second active component selected from Group VIII non-precious metals and a precious metal component; based on the total weight of the catalyst, the content of the support is 25-95 wt%, the content of the first active component as oxide is 4-60 wt%, the content of the second active component (as_oxide) is 2-12 wt%, and the content of the precious metal component as element is 0.01-2 wt%;

as metal oxides, the molar ratio of the first active component to the second active component is (0.5-15): 1.

2. The catalyst according to technical solution 1, wherein, based on the total weight of the catalyst, the content of the support is 40-90 wt%, the content of the first active component as oxide is 8-50 wt%, the content of the second active component (as_oxide) is 2-12 wt%, and the content of the precious metal component as element is 0.02-1.5 wt%;

preferably, based on the total weight of the catalyst, the content of the support is 50-88 wt%, the content of the first active component as oxide is 8-40 wt%, the content of the second active component (as_oxide) is 2-10 wt%, and the content of the precious metal component as element is 0.03-1.2 wt%.

3. The catalyst according to technical solution 1 or 2, wherein, as metal oxides, the molar ratio of the first active component to the second active component is (1-10):1, further preferably (2-5):1.

4. The catalyst according to any one of technical solutions 1-3, wherein,

the first active component is La and/or Ce, preferably La;
the second active component is at least one of Group VIII metals, preferably Co and/or Fe, more preferably Co;
the precious metal component is one or more of Pt, Pd and Rh, most preferably Pd;
the support is at least one of alumina, silica-alumina, zeolite, spinel, kaolin, diatomaceous earth, perlite, and perovskite, preferably alumina.

5. A method for preparing the catalyst for reducing the emission of NOx and SOx in flue gas according to any one of technical solutions 1-4, which method comprises:

(1) providing a precursor solution containing a precursor of a first active component selected from rare earth metals, and a precursor of a second active component selected from Group VIII non-precious metals;
(2) carrying out a coprecipitation reaction between the precursor solution and a coprecipitant, then drying and calcining;
(3) mixing and slurrifying the solid product obtained in step (2) and a support and/or a precursor of a support to produce a slurry, then drying and calcining the slurry;
(4) impregnating the solid product obtained in step (3) with a solution containing a precursor of precious metal component as impregnation solution, then drying and/or calcining.

6. The preparation method according to technical solution 5, wherein the precursor of first active component and the precursor of second active component are each independently selected from nitrate and/or chloride of each metal component;

the precursor of the precious metal component is at least one of palladium nitrate, palladium chloride, platinum chlorate and rhodium chloride, preferably palladium nitrate and/or palladium chloride.

7. The preparation method according to technical solution 5 or 6, wherein in step (2), the coprecipitant is a carbonate salt, further preferably at least one of ammonium carbonate, potassium carbonate and sodium carbonate;

preferably, the coprecipitation reaction is carried out at pH=8-10;
preferably, the condition for calcining in step (2) includes: the temperature is 300-800°C, the time is 1-8h.

8. The preparation method according to any one of technical solutions 5-7, wherein in step (3), the slurry has a solid content of 7-35 wt%;

preferably, the condition for calcining in step (3) includes: the temperature is 300-800°C, the time is 1-5h.

9. The preparation method according to any one of technical solutions 5-8, wherein, in step (4), the precursor of precious metal component is hydrolyzed in an acid solution to provide the impregnation solution;

preferably, the acid is selected from water-soluble inorganic acids and/or organic acids,
preferably at least one of hydrochloric acid, nitric acid, phosphoric acid, and acetic acid; preferably, the acid is used in such an amount that the pH value of the impregnation solution is less than 5.0, preferably 2-5;
preferably, the condition for calcining in step (4) includes: the temperature is 300-700°C, the time is 0. 1-5h.

10. A method for simultaneously reducing both SOx and NOx from flue gas, which method comprises: contacting a flue gas containing SOx and NOx with the catalyst for reducing the emission of NOx and SOx in flue gas according to any one of technical solutions 1-4 under a condition for simultaneously removing SOx and NOx;

preferably, the condition for simultaneously removing SOx and NOx comprises: the temperature is 500-800°C, the pressure is 0.01-4MPa, the volumetric hourly space velocity of flue gas is 100-50000h$^{-1}$;

preferably, in the flue gas, the SOx content is 0.001-0.5 vol%, the NOx content is 0.001-0.3 vol%;

preferably, the flue gas is a catalytic cracking regeneration flue gas.

In an aspect of the present invention, the present invention provides the following technical solutions:

1. A catalyst capable of/for simultaneously reducing both SOx and NOx in flue gas, wherein the catalyst comprises a support and, loaded on the support, a first active component selected from rare earth metals, a second active component selected from non-precious metals of Groups VB, VIII, IB, and IIB, a third active component selected from Group IIA metals, and a precious metal component; based on the total weight of the catalyst, the content of the support is 25-93 wt%, the content of the first active component as oxide is 4-60 wt%, the content of the second active component (as_oxide) is 2-30 wt%, the content of the third active component (as_oxide) is 1-30 wt%, and the content of the precious metal component as element is 0.01-2 wt%.

2. The catalyst according to technical solution 1, wherein,
as metal oxides, the molar ratio of the first active component to the second active component is (0.4-12): 1, preferably (0.5-8): 1, further preferably (1-4): 1.

3. The catalyst according to technical solution 1, wherein,
based on the total weight of the catalyst, the content of the support is 40-87 wt%, the content of the first active component as oxide is 8-50 wt%, the content of the second active component (as_oxide) is 3-20 wt%, the content of the third active component (as_oxide) is 1-20 wt%, and the content of the precious metal component as element is 0.02-1.5 wt%; preferably, based on the total weight of the catalyst, the content of the support is 45-80 wt%, the content of the first active component as oxide is 8-40 wt%, the content of the second active component (as_oxide) is 3-15 wt%, the content of the third active component (as_oxide) is2-15 wt%, and the content of the precious metal component as element is 0.03-1.2 wt%.

4. The catalyst according to any one of technical solutions 1-3, wherein,

the support is at least one of alumina, silica-alumina, zeolite, spinel, kaolin, diatomaceous earth, perlite, and perovskite, preferably alumina;
the first active component is La and/or Ce, preferably La;
the second active component is at least one of Group VIII metals, preferably Co and/or Fe, more preferably Co;
the third active component is one or more of Be, Mg, Ca, Sr and Ba, preferably Mg;
the precious metal component is one or more of Pt, Pd and Rh, most preferably Pd.

5. A method for preparing a catalyst capable of simultaneously reducing SOx and NOx in flue gas, which method comprises the steps of:

(1) providing a precursor solution containing a precursor of a first active component selected from rare earth metals, a precursor of a second active component selected from non-precious metals of Groups VB, VIII, IB, and IIB, and a precursor of a third active component selected from Group IIA metals;
(2) carrying out a coprecipitation reaction between the precursor solution and a coprecipitant, then drying and calcining;
(3) mixing and slurrifying the solid product obtained in step (2) and a support and/or a precursor of a support and optionally a precursor of precious metal component to produce a slurry, then drying and calcining the slurry;

the method also optionally comprises: (4) impregnating the solid product obtained in step (3) with a solution containing a precursor of precious metal component as impregnation solution, then drying and/or calcining; the precursor of first active component, the precursor of second active component, the precursor of third active component, the support and/or the precursor of support, and the precursor of precious metal component are used in such amounts that in the prepared catalyst, based on the total weight of the catalyst, the content of the support is 25-93 wt%, the content of the first active component as oxide is 4-60 wt%, the content of the second active component (as_oxide) is 2-30 wt%, the content of the third active component (as_oxide) is 1-30 wt%, and the content of the precious metal component as element is 0.01-2 wt%.

6. The method according to technical solution 5, wherein, as metal element, the molar ratio of the precursor of first active component to the precursor of second active component is (0.4-12): 1, preferably (0.5-8): 1, further preferably (1-4): 1.

7. The method according to technical solution 5 or 6, wherein, the precursor of first active component, the precursor of second active component, the precursor of third active component, the support and/or the precursor of support, and the precursor of precious metal component are used in such amounts that in the prepared catalyst, based on the total weight of the catalyst, the content of the support is 40-87 wt%, the content of the first active component as oxide is 8-50 wt%, the content of the second active component (as_oxide) is 3-20 wt%, the content of the third active component (as_oxide) is 1-20 wt%, and the content of the precious metal component as element is 0.02-1.5 wt%; preferably, the precursor of first active component, the precursor of second active component, the precursor of third active component, the support and/or the precursor of support, and the precursor of precious metal component are used in such amounts that in the prepared catalyst, based on the total weight of the catalyst, the content of the support is 45-80 wt%, the content of the first active component as oxide is 8-40 wt%, the content of the second active component (as_oxide) is 3-15 wt%, the content of the third active component (as_oxide) is 2-15 wt%, and the content of the precious metal component as element is 0.03-1.2 wt%.

8. The method according to any one of technical solutions 5-7, wherein,

the support is at least one of alumina, silica-alumina, zeolite, spinel, kaolin, diatomaceous earth, perlite, and perovskite, preferably alumina;
the first active component is La and/or Ce, preferably La;
the second active component is at least one of Group VIII metals, preferably Co and/or Fe, more preferably Co;
the third active component is one or more of Be, Mg, Ca, Sr and Ba, preferably Mg;
the precious metal component is one or more of Pt, Pd and Rh, most preferably Pd.

9. The method according to any one of technical solutions 5-8, wherein,

in step (2), the coprecipitant is a carbonate salt, preferably at least one of ammonium carbonate, potassium carbonate, and sodium carbonate;
preferably, in step (2), the coprecipitation reaction is carried out at pH=8-10;
preferably, in step (3), the slurry has a solid content of 6-38 wt%.

10. The method according to any one of technical solutions 5-9, wherein,

in step (4), the precursor of precious metal component is hydrolyzed in an acid solution to provide the impregnation solution;
preferably, the acid is selected from water-soluble inorganic acids and/or organic acids, preferably at least one of hydrochloric acid, nitric acid, phosphoric acid, and acetic acid; preferably, the acid is used in such an amount that the pH value of the impregnation solution is less than 6.0, preferably 2-5.

11. The method according to any one of technical solutions 5-10, wherein, in step (2), step (3) and step (4), the conditions for calcining may each independently include: the temperature is 300-800°C, the time is 0.5-8h.

12. The catalyst capable of simultaneously reducing SOx and NOx in flue gas prepared with the method according to any one of technical solutions 5-11.

13. Use of the catalyst capable of simultaneously reducing SOx and NOx in flue gas according to any one of technical solutions 1-4 and 12 in simultaneously removing both SOx and NOx in a flue gas containing SOx and NOx.

14. A method for simultaneously reducing both SOx and NOx from flue gas, which method comprises:

contacting a flue gas with the catalyst capable of simultaneously reducing SOx and NOx in flue gas according to any one of technical solutions 1-4 and 12;
preferably, the condition for contacting includes: the temperature is 500-800°C, the pressure is 0.01-4MPa, the volumetric hourly space velocity of catalytic cracking regeneration flue gas is 200-20000h$^{-1}$;
preferably, in the flue gas, the SOx content is 0.001-0.5 vol%, the NOx content is 0.001-0.3 vol%.

In an aspect of the present invention, the present invention provides the following technical solutions:

1. A catalyst capable of/for simultaneously reducing both SOx and NOx in flue gas, which is characterized in that, the catalyst comprises the following components or essentially consists of the following components, wherein the active component is components (2) to (6):
(1) a support or inorganic oxide matrix, (2) a rare earth metal, (3) a non-precious metal selected from Group VIII, or non-precious metal(s) selected from Groups VB, VIII, IB, and IIB, (4) a precious metal, (5) optionally, a Group VIIB non-precious metal, (6) optionally, a Group IIA metal,

wherein on the basis that the total weight of the catalyst is 100 wt%,

the content of the support or inorganic oxide matrix of component (1) as oxide is 25-95 wt%, e.g., 25-93 wt%, or 25-92 wt%, or 40-90 wt%, or 40-87 wt%, or 40-85 wt%, or 45-80 wt%, or 50-88 wt%, or 50-80 wt%;

the content of the rare earth metal(s) of component (2) as oxide is 2-70 wt%, e.g., 4-60 wt%, or 4-50 wt%, or 4-40 wt%, or 6-70 wt%, or 8-50 wt%, or 8-40 wt%, or 12-60 wt%, or 12-48 wt%;

the content of the non-precious metal selected from Group VIII or said non-precious metal(s) selected from Groups VB, VIII, IB, and IIB of component (3) as oxide is 1-30 wt%, e.g., 1-15 wt%, or 1-12 wt%, or 2-30 wt%, or 2-12 wt%, or 2-10 wt%, or 2-8 wt%, or 3-20 wt%, or 3-15 wt%;

the content of the precious metal of component (4) as element is 0.01-2 wt%, e.g., 0.01-1.5 wt%, or 0.01-2 wt%, or 0.02-1.5 wt%, or 0.02-1.2 wt%, or 0.02-1.0 wt%; or 0.03-1.2 wt%; the content of the Group VIIB non-precious metal of component (5) as oxide is: 0 or 1-10 wt%, 0 or 1-8 wt%, 0 or 2-5 wt%;

the content of the Group IIA metal of component (6) as oxide is 0 or 1-30 wt%, 0 or 1-20 wt%, 0 or 2-15 wt%; wherein, as metal element, the molar ratio of component (2) to component (3) is (0.4-18): 1, for example (0.4-12):1, or (0.5-15): 1, or (0.5-12):1, or (0.5-8):1, or (0.6-18):1, or (1-10):1, or (1-6):1, or (1-4):1, or (2-12):1, or (2-5):1, or (3-6):1;

preferably, the sum of the content of the Group VIIB non-precious metal of component (5) as oxide and the content of the Group IIA metal of component (6) as oxide is not zero.

2. The catalyst according to technical solution 1, wherein,

the support or inorganic oxide matrix of component (1) is at least one of alumina, silica-alumina, zeolite, spinel, kaolin, diatomaceous earth, perlite, and perovskite, preferably alumina; and/or

the rare earth metal of component (2) is one or more of La, Ce, Pr and Nd, more preferably La and/or Ce; most preferably La; and/or

the non-precious metal selected from Group VIII of component (3) is Co and/or Fe, more preferably Co; or said non-precious metal(s) selected from Groups VB, VIII, IB, and IIB of component (3) is one or more of Fe, Co, Ni, Cu, Zn, and V, more preferably Co and/or Fe, most preferably Co; and/or

the precious metal of component (4) is one or more of Ru, Rh, Re, Pt, Pd, Ag, Ir, and Au, more preferably one or more of Pt, Pd and Rh, most preferably Pd; and/or

the Group VIIB non-precious metal of component (5) is Mn; and/or

the Group IIA metal of component (6) is one or more of Be, Mg, Ca, Sr and Ba, more preferably Mg.

3. The catalyst according to any one of the preceding technical solutions, wherein

the catalyst comprises (1) a support and, loaded on the support, (2) a rare earth metal, (3) a non-precious metal selected from Group VIII, and (4) a precious metal, wherein the active component is components (2) to (4);

wherein on the basis that the total weight of the catalyst is 100 wt%,

the content of the support of component (1) is 25-95 wt%;

the content of the rare earth metal(s) of component (2) as oxide is 4-60 wt%;

the content of the non-precious metal selected from Group VIII of component (3) as oxide is 2-12 wt%;

the content of the precious metal of component (4) as element is 0.01-2 wt%;

or

the content of the support of component (1) is 40-90 wt%;

the content of the rare earth metal(s) of component (2) as oxide is 8-50 wt%;

the content of the non-precious metal selected from Group VIII of component (3) as oxide is 2-12 wt%;

the content of the precious metal of component (4) as element is 0.02-1.5 wt%;

or

the content of the support or inorganic oxide matrix of component (1) as oxide is 50-88 wt%;

the content of the rare earth metal(s) of component (2) as oxide is 8-40 wt%;

the content of the non-precious metal selected from Group VIII of component (3) as oxide is 2-10 wt%;

the content of the precious metal of component (4) as element is 0.03-1.2 wt%;

wherein, as metal element, the molar ratio of component (2) to component (3) is (0.5-15): 1, or (1-10):1, or (2-5):1.

4. The catalyst according to any one of the preceding technical solutions, wherein the catalyst comprises (1) a support and, loaded on the support, (2) a rare earth metal, (3) non-precious metal(s) selected from Groups VB, VIII, IB, and IIB, (4) a precious metal, and (6) a Group IIA metal,

wherein the active component is components (2) to (4) and (6);

wherein on the basis that the total weight of the catalyst is 100 wt%,

the content of the support or inorganic oxide matrix of component (1) as oxide is 25-93 wt%;

the content of the rare earth metal(s) of component (2) as oxide is 4-60 wt%;

the content of the non-precious metal(s) selected from Groups VB, VIII, IB, and IIB of component (3) as oxide is 2-30 wt%;

the content of the precious metal of component (4) as element is 0.01-2 wt%;

the content of the Group IIA metal of component (6) as oxide is 1-30 wt%;

or

the content of the support or inorganic oxide matrix of component (1) as oxide is 40-87 wt%;

the content of the rare earth metal(s) of component (2) as oxide is 8-50 wt%;

the content of the non-precious metal(s) selected from Groups VB, VIII, IB, and IIB of component (3) as oxide is 3-20 wt%;

the content of the precious metal of component (4) as element is 0.02-1.5 wt%;

the content of the Group IIA metal of component (6) as oxide is 1-20 wt%;

or

the content of the support or inorganic oxide matrix of component (1) as oxide is 40-85 wt%;

the content of the rare earth metal(s) of component (2) as oxide is 8-40 wt%;

the content of the non-precious metal(s) selected from Groups VB, VIII, IB, and IIB of component (3) as oxide is 3-15 wt%;

the content of the precious metal of component (4) as element is 0.03-1.2 wt%;

the content of the Group IIA metal of component (6) as oxide is 2-15 wt%;

wherein, as metal element, the molar ratio of component (2) to component (3) is (0.4-18): 1, for example (0.4-12):1, or (0.5-8):1, or (1-4):1.

5. The catalyst according to any one of the preceding technical solutions, wherein
the catalyst comprises the following components or essentially consists of the following components, wherein the active component is components (2) to (5):
(1) a support or inorganic oxide matrix, (2) a rare earth metal, (3) non-precious metal(s) selected from Groups VB, VIII, IB, and IIB, (4) a precious metal, and (5) a Group VIIB non-precious metal,

wherein on the basis that the total weight of the catalyst is 100 wt%,

the content of the support or inorganic oxide matrix of component (1) as oxide is 25-92 wt%;

the content of the rare earth metal(s) of component (2) as oxide is 6-70 wt%;

the content of the non-precious metal(s) selected from Groups VB, VIII, IB, and IIB of component (3) as oxide is 1-12 wt%;

the content of the precious metal of component (4) as element is 0.01-1.5 wt%;

the content of the Group VIIB non-precious metal of component (5) as oxide is: 1-10 wt%; or

the content of the support or inorganic oxide matrix of component (1) as oxide is 40-85 wt%;

the content of the rare earth metal(s) of component (2) as oxide is 12-60 wt%;

the content of the non-precious metal(s) selected from Groups VB, VIII, IB, and IIB of component (3) as oxide is 2-10 wt%;

the content of the precious metal of component (4) as element is 0.02-1.2 wt%;

the content of the Group VIIB non-precious metal of component (5) as oxide is: 1-8 wt%; or

the content of the support or inorganic oxide matrix of component (1) as oxide is 40-85 wt%;

the content of the rare earth metal(s) of component (2) as oxide is 12-48 wt%;

the content of the non-precious metal(s) selected from Groups VB, VIII, IB, and IIB of component (3) as oxide is 2-8 wt%;

the content of the precious metal of component (4) as element is 0.02-1.0 wt%;

the content of the Group VIIB non-precious metal of component (5) as oxide is: 2-5 wt%; wherein, as metal element, the molar ratio of component (2) to component (3) is (0.6-18): 1, e.g. (2-12):1, or (3-6):1.

6. The catalyst according to any one of the preceding technical solutions, wherein
the catalyst comprises the following components or essentially consists of the following components, wherein the active component is components (2) to (6):
(1) a support or inorganic oxide matrix, (2) a rare earth metal, (3) non-precious metal(s) selected from Groups VB, VIII, IB, and IIB, (4) a precious metal, (5) a Group VIIB non-precious metal, and (6) a Group IIA metal,

wherein on the basis that the total weight of the catalyst is 100 wt%,

the content of the support or inorganic oxide matrix of component (1) as oxide is 25-95 wt%;

the content of the rare earth metal(s) of component (2) as oxide is 2-70 wt%;

the content of the non-precious metal(s) selected from Groups VB, VIII, IB, and IIB of component (3) as oxide is 1-15 wt%;

the content of the precious metal of component (4) as element is 0.01-1.5 wt%;

the content of the Group VIIB non-precious metal of component (5) as oxide is: 1-10 wt%;

the content of the Group IIA metal of component (6) as oxide is 1-30 wt%; or

the content of the support or inorganic oxide matrix of component (1) as oxide is 40-90 wt%;

the content of the rare earth metal(s) of component (2) as oxide is 4-50 wt%;

the content of the non-precious metal(s) selected from Groups VB, VIII, IB, and IIB of component (3) as oxide is 2-12 wt%;

the content of the precious metal of component (4) as element is 0.02-1.2 wt%;

the content of the Group VIIB non-precious metal of component (5) as oxide is: 1-8 wt%;

the content of the Group IIA metal of component (6) as oxide is 1-20 wt%;

or

the content of the support or inorganic oxide matrix of component (1) as oxide is 50-80 wt%;

the content of the rare earth metal(s) of component (2) as oxide is 4-40 wt%;

the content of the non-precious metal(s) selected from Groups VB, VIII, IB, and IIB of component (3) as oxide is 2-10 wt%;

the content of the precious metal of component (4) as element is 0.02-1.0 wt%;

the content of the Group VIIB non-precious metal of component (5) as oxide is: 2-5 wt%; the content of the Group IIA metal of component (6) as oxide is 2-15 wt%;

wherein, as metal element, the molar ratio of component (2) to component (3) is (0.4-18): 1, for example (0.5-12):1, or (1-6):1.

7. The catalyst according to any one of the preceding technical solutions, wherein the catalyst is a catalyst that has been exposed to an atmosphere containing $SO_2$;

for example, the catalyst is a catalyst that has been exposed to an atmosphere containing $SO_2$, wherein the atmosphere containing $SO_2$ has a temperature of 350-1000°C, a pressure of 0-8 MPa, and an $SO_2$ content of 0.001-100 vol%; or

the catalyst is a catalyst that has been exposed to an atmosphere containing $SO_2$ for at least 1 minute, wherein the atmosphere containing $SO_2$ has a temperature of 400-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 450-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 500-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 550-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 600-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 650-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 400-800°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 450-800°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 500-800°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 550-800°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 600-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 650-900°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 400-750°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 450-750°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 500-750°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 550-750°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 600-750°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 650-750°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 400-700°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 450-700°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 500-700°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 550-700°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 600-700°C, a pressure of 0-5 MPa, and an $SO_2$ content of 0.001-5 vol%; or

the catalyst is a catalyst that has been exposed to an atmosphere containing $SO_2$ for at least 1 minute, wherein the atmosphere containing $SO_2$ has a temperature of 650-700°C, a pressure of 0-5 MPa, and an $SO_2$ content of 0.001-5 vol%; or

the catalyst is a catalyst that has been exposed to an atmosphere containing $SO_2$ for 30-480 minutes, wherein the atmosphere containing $SO_2$ has a temperature of 400-900°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 450-900°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 500-900°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 550-900°C, a pressure of 0-2 MPa, and an $SO_2$ content of 0.01-1 vol%; or

the catalyst is a catalyst that has been exposed to an atmosphere containing $SO_2$ for 30-480 minutes, wherein

the atmosphere containing $SO_2$ has a temperature of 600-900°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 650-900°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 400-800°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 450-800°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 500-800°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 550-800°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 600-800°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 650-800°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 400-750°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 450-750°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 500-750°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 550-750°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 600-750°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 650-750°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 400-700°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 450-700°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 500-700°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 550-700°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 600-700°C, a pressure of 0-2 MPa, and an $SO_2$ content of 0.01-1 vol%; or

the catalyst is a catalyst that has been exposed to an atmosphere containing $SO_2$ for 30-480 minutes, wherein the atmosphere containing $SO_2$ has a temperature of 650-700°C, a pressure of 0-2 MPa, and an $SO_2$ content

of 0.01-1 vol%; or

the catalyst is a catalyst that has been exposed to an atmosphere containing $SO_2$ for 60-120 minutes, wherein the atmosphere containing $SO_2$ has a temperature of 400-900°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 450-900°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 500-900°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 550-900°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 600-900°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 650-900°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 400-800°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 450-800°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 500-800°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 550-800°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 600-800°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 650-800°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 400-750°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 450-750°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 500-750°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 550-750°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 600-750°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 650-750°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 650-750°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 400-700°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 450-700°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 500-700°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 550-700°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 600-700°C, a pressure of 0-0.5 MPa, and an $SO_2$ content of 0.02-0.5 vol%; or

the catalyst is a catalyst that has been exposed to an atmosphere containing $SO_2$ for 60-120 minutes, wherein the atmosphere containing $SO_2$ has a temperature of 650-700°C, a pressure of 0-0.5 MPa, and an $SO_2$ content of 0.02-0.5 vol%.

8. The catalyst according to any one of the preceding technical solutions, wherein

the rare earth metal(s) of component (2) comprises La;
the non-precious metal selected from Group VIII or said non-precious metal(s) selected from Groups VB, VIII, IB, and IIB of component (3) comprises Co;
the precious metal of component (4) comprises Pd;
the Group VIIB non-precious metal of component (5), if any, comprises Mn;
the Group IIA metal of component (6), if any, comprises Mg.

9. The catalyst according to any one of the preceding technical solutions, wherein

the rare earth metal(s) of component (2) is La;
the non-precious metal selected from Group VIII or said non-precious metal(s) selected from Groups VB, VIII, IB, and IIB of component (3) is Co;
the precious metal of component (4) is Pd;
the Group VIIB non-precious metal of component (5), if any, is Mn;
the Group IIA metal of component (6), if any, is Mg.

10. The catalyst according to any one of the preceding technical solutions, wherein the catalyst is a catalyst that has been exposed to an atmosphere containing $SO_2$, the catalyst has characteristic peaks at $2\theta=28.6°\pm0.1°$, $30.0°\pm0.1°$ and $50.4°\pm0.1°$ in the powder XRD spectrum.

11. The catalyst according to any one of the preceding technical solutions, wherein the catalyst (fresh) has characteristic peaks at $2\theta=33.0°\pm0.1°$, $33.5°\pm0.1°$, and $47.5°\pm0.1°$, as well as $27.0°\pm0.1°$, $28.0°\pm0.1°$, and $39.5°\pm0.1°$ in the powder XRD spectrum.

12. A method for preparing the catalyst according to any one of the preceding technical solutions, which method comprises:

(I) a co-precipitation method or a sol-gel method is used to produce an active metal precursor, wherein the active metal in the active metal precursor comprises (2) a rare earth metal, (3) a non-precious metal selected from Group VIII, or non-precious metal(s) selected from Groups VB, VIII, IB, and IIB, (5) optionally, a Group VIIB non-precious metal, and (6) optionally, a Group IIA metal; and
(II) the active metal precursor and (1) the support or inorganic oxide matrix or a precursor thereof, and optionally a precursor of (4) the precious metal are mixed and slurrified to produce a slurry, the resulting slurry is dried and/or calcined to produce a catalyst; or
the active metal precursor and (1) the support or inorganic oxide matrix or a precursor thereof, and optionally a precursor of (4) the precious metal are mixed and slurrified to produce a slurry, the resulting slurry is dried and/or calcined to produce a semi-finished catalyst product; then the semi-finished catalyst product is impregnated with a solution containing a precursor of (4) the precious metal as impregnation solution to produce a solid product, and then the solid product is dried and/or calcined to produce a catalyst;

wherein the active metal precursor, the support or inorganic oxide matrix or the precursor thereof, and the precursor of the precious metal are used in such amounts that the produced catalyst has the composition of the catalyst of any of the preceding technical solutions.

13. The preparation method according to any of the preceding technical solutions, wherein in step (I), the co-precipitation method is used to produce the active metal precursor; preferably, the co-precipitation method comprises:

> (I-1) providing a first solution containing a precursor of (2) rare earth metal(s), a precursor of (3) non-precious metal selected from Group VIII or non-precious metal(s) selected from Groups VB, VIII, IB, and IIB, optionally a precursor of (5) Group VIIB non-precious metal, and optionally a precursor of (6) Group IIA metal;
> preferably, each precursor is independently selected from nitrate and/or chloride of each metal;
> (I-2) subjecting the first solution and a coprecipitant to carry out a coprecipitation reaction; preferably, the coprecipitant is a carbonate salt, further preferably at least one of ammonium carbonate, potassium carbonate and sodium carbonate;
> preferably, the coprecipitation reaction is carried out at pH=8-10;
> (I-3) drying and/or calcining a soild product obtained in the coprecipitation reaction to produce an active metal precursor;
> preferably, the condition for calcining in step (I-3) includes: the temperature is 300-800°C, e.g., 300-700°C, the time is 0.5-8h, e.g., 1-8h or 1-5h,
> wherein, the support or inorganic oxide matrix or a precursor thereof, the precursor of rare earth metal(s), the precursor of non-precious metal selected from Group VIII or non-precious metal(s) selected from Groups VB, VIII, IB, and IIB, the precursor of precious metal, optionally the precursor of Group VIIB non-precious metal, and optionally the precursor of Group IIA metal are used in such amounts that the produced catalyst has the composition of the catalyst of any of the preceding technical solutions.

14. The preparation method according to any one of the preceding technical solutions, wherein

> in step (II), the precursor of the precious metal component is at least one of nitrates, chlorides, and/or chlorates, e.g. at least one of palladium nitrate, palladium chloride, platinum chlorate and rhodium chloride, preferably palladium nitrate and/or palladium chloride; and/or
> in step (II), the slurry has a solid content of 5-40 wt%, e.g., 6-38 wt%, or 7-35 wt%; and/or in step (II), the condition for calcining the slurry includes: the temperature is 300-800°C, e.g., 300-700°C, the time is 0.5-8h, e.g., 1-8h or 1-5h; and/or
> in step (II), the precursor of precious metal is hydrolyzed in an acid solution to provide the impregnation solution;

>> preferably, the acid is selected from water-soluble inorganic acids and/or organic acids, more preferably, at least one of hydrochloric acid, nitric acid, phosphoric acid, and acetic acid;
>> preferably, the acid is used in such an amount that the pH value of the impregnation solution is less than 6.0, preferably less than 5.0, e.g. 2.0-5.0;
>> preferably, the condition for calcining the solid product includes: the temperature is 300-800°C, e.g., 300-700°C, the time is 0.5-8h, e.g., 1-8h or 1-5h.

15. A method for simultaneously reducing both SOx and NOx from flue gas, which comprises, under a condition for removing SOx and NOx, contacting the flue gas with a catalyst according to any one of the preceding technical solutions or a catalyst prepared by a preparation method according to any one of the preceding technical solutions;

> preferably, the condition for removing SOx and NOx includes: the temperature is 300-1000°C, e.g. 500-800°C, or 600-750°C, or 625-750°C, or 650-750°C, or 675-750°C, or 700-750°C, or 725-750°C, or 600-725°C, or 625-725°C, or 650-725°C, or 675-725°C, or 700-725°C, or 600-700°C, or 625-700°C, or 650-700°C, or 675-700°C, or 600-675°C, or 625-675°C, or 650-675°C, or 600-650°C, or 625-650°C, or 600-625°C; the pressure is 0-4 MPa, e.g. 0.01-4 MPa, or 0.02-4 MPa, or 0-0.5 MPa; the volumetric hourly space velocity of flue gas is 100-50000 $h^{-1}$ or 200-20000$h^{-1}$; and/or
> preferably, in the flue gas, the SOx content is 0.001-0.5 vol%, the NOx content is 0.001-0.3 vol%; or the volume fractions of SOx and NOx in the flue gas are respectively 1-3000 $\mu$L/L, and the molar ratio of SOx to NOx is 0.5:1-2:1; and/or
> preferably, the flue gas is a flue gas containing a certain concentration of SOx and NOx at the same time, e.g. catalytic cracking regeneration flue gas; preferably, contacting the catalytic cracking regeneration flue gas with the catalyst is carried out in a flue gas passway provided after a catalytic cracking cyclone separator and/or after a CO incinerator.

In the present invention, the contents of components in a catalyst with regular structure are determined using the X-ray fluorescence spectroscopy (Petrochemical Analysis Methods (RIPP Experimental Methods), edited by Yang Guiding et al., published by Science Press in 1990).

In the present invention, a Siemens D5005 diffractometer is used to perform powder X-ray diffraction (XRD) analysis on the catalyst sample, in which CuKα (λ=0.15418nm) radiation is generated under the conditions of 40 kV, 40 mA and filtered by Ni. Diffraction signals are recorded in the range of 2θ 5-70° with a step of 0.02°.

In the present invention, the condition for calcining is not particularly limited. For example, the calcining can be performed in an air or inert atmosphere (e.g. nitrogen); the condition for calcining may be: the temperature is 300-900°C, e.g. 400, 500, 600, 700, 800°C and a temperature range formed from any two of these points, the time is 0.1-12h, e.g. 0.1-5h, and the pressure can be below atmospheric pressure, atmospheric pressure, or above atmospheric pressure (e.g. 0-5MPa).

In the present invention, the condition for drying is not particularly limited. For example, the condition for drying may be: the temperature is 25-250°C, the time is 0.1-12h, and the pressure may be in vacuum (for example the absolute pressure is 0-1kPa, 0-5kPa, 0-10kPa, 0-20kPa, 0-30kPa, 0-40kPa, 0-50kPa, 0-60kPa, 0-70kPa, 0-80kPa, 0-90kPa, 0-100kPa) or atmospheric pressure (the absolute pressure is 0.1MPa). In the present invention, in case that the dying followed by the calcining is performed, the drying temperature is lower than the calcining temperature.

In the present invention, the ppm refers to the volume concentration unless otherwise specified.

The following describes the implementation process and the beneficial effects of the present invention in detail through specific examples, which are intended to help readers understand the spirit and essence of the present invention more clearly, but do not limit the implementation scope of the present invention in any way.

The raw materials used in the following examples and comparative examples are all commercially available products. The specific manufacturers and grades are shown in Table 1 below:

Table 1 Manufacturers and grades of raw materials used in Examples and Comparative Examples

| Raw material | Manufacturer | Grade |
|---|---|---|
| lanthanum nitrate | Aladdin Biochemical Company | analytically pure |
| cobalt nitrate | Beijing Inno-Chem Technology Co., Ltd. | analytically pure |
| ammonium carbonate | Beijing Chemical Plant | analytically pure |
| ammonia water | Damao Chemical Reagent Factory | analytically pure, 25% |
| palladium chloride | Sinopharm Beijing Subsidiary-Procurement Supply Station | / |
| hydrochloric acid | Beijing Chemical Plant | / |
| OX50-SiO$_2$ | Sinopec Catalyst Company | / |
| magnesium nitrate | Sinopharm Chemical Reagent Co., Ltd. | analytically pure |
| manganese chloride | Beijing Chemical Plant | analytically pure |

In the following examples, the contents of the components in a catalyst are determined by X-ray fluorescence spectroscopy (XRF). For details, see Petrochemical Analysis Methods (RIPP Experimental Methods), edited by Yang Guiding et al., published by Science Press in 1990.

In the following examples, a Siemens D5005 diffractometer was used to perform powder X-ray diffraction (XRD) analysis on the catalyst sample, in which CuKα (λ=0.15418nm) radiation was generated under the conditions of 40 kV, 40 mA and filtered by Ni. Diffraction signals were recorded in the range of 2θ 5-70° with a step of 0.02°.

Example A1

350mL of deionized water was added to a beaker, and then 30g as the mass of La2O3 of lanthanum nitrate, 5g as the mass of $Co_2O_3$ of cobalt nitrate were added under stirring until completely dissolved. Ammonium carbonate (52.5g) was added to deionized water (210mL), and the mixture was stirred until completely dissolved. The metal nitrate mixed solution was added to the ammonium carbonate solution while stirring, and a certain amount of ammonia water was added to maintain the pH value of the solution at 9. The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of hydrochloric acid (36 wt%) were added. The resulting mixture was slurrified. 20g of the active metal precursor was weighed and added to the acidified support and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst A1.

XRD analysis was performed on fresh catalyst A1. In the XRD spectrum, there were characteristic peaks at 2θ=about 33.0°, about 33.5° and about 47.5° as well as at 2θ=about 27.0°, about 28.0° and about 39.5°.

Catalyst A1 was exposed to an atmosphere containing $SO_2$ for 5 mins, wherein the atmosphere containing $SO_2$ had a temperature of 400°C, a pressure of 0 MPa, and an $SO_2$ content of 0.001 vol%. After exposure to $SO_2$ treatment, XRD analysis was performed on catalyst A1. In the XRD spectrum of catalyst A1, there were characteristic peaks at 2θ=about 28.6°, about 30.0° and about 50.4°.

Example A2

125mL of deionized water was added to a beaker, and then 10g as the mass of La2O3 of lanthanum nitrate, 2.5g as the mass of $Co_2O_3$ of cobalt nitrate were added under stirring until completely dissolved. Ammonium carbonate (18.75g) was added to deionized water (75mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 330mL of water and 6g of hydrochloric acid (36 wt%) were added. The resulting mixture was slurrified. 10g of the active metal precursor was weighed and added to the acidified support and the resulting mixture was stirred. The slurry was dried at 200°C, then calcined in an air atmosphere at 700°C for 4 hours to produce a semi-finished catalyst microsphere product. The non-precious metal active component comprised 20wt% of the prepared semi-finished catalyst microsphere product.

A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.003g) of the palladium chloride solution was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst A2.

XRD analysis was performed on fresh catalyst A2. In the XRD spectrum, there were characteristic peaks at 2θ=about 33.0°, about 33.5° and about 47.5° as well as at 2θ=about 27.0°, about 28.0° and about 39.5°.

Catalyst A2 was exposed to an atmosphere containing $SO_2$ for 5 mins, wherein the atmosphere containing $SO_2$ had a temperature of 400°C, a pressure of 0 MPa, and an $SO_2$ content of 0.001 vol%. After exposure to $SO_2$ treatment, XRD analysis was performed on catalyst A2. In the XRD spectrum of catalyst A2, there were characteristic peaks at 2θ=about 28.6°, about 30.0° and about 50.4°.

Example A3

331mL of deionized water was added to a beaker, and then 30g as the mass of La2O3 of lanthanum nitrate, 3.1g as the mass of $Co_2O_3$ of cobalt nitrate were added under stirring until completely dissolved. Ammonium carbonate (49.65g) was added to deionized water (200mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of hydrochloric acid (36 wt%) were added. The resulting mixture was slurrified. 20g of the active metal precursor was weighed and added to the acidified support and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.003g) of the palladium chloride solution was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst A3.

XRD analysis was performed on fresh catalyst A3. In the XRD spectrum, there were characteristic peaks at $2\theta$=about 33.0°, about 33.5° and about 47.5° as well as at $2\theta$=about 27.0°, about 28.0° and about 39.5°.

Catalyst A3 was exposed to an atmosphere containing $SO_2$ for 5 mins, wherein the atmosphere containing $SO_2$ had a temperature of 400°C, a pressure of 0 MPa, and an $SO_2$ content of 0.001 vol%. After exposure to $SO_2$ treatment, XRD analysis was performed on catalyst A3. In the XRD spectrum of catalyst A3, there were characteristic peaks at $2\theta$=about 28.6°, about 30.0° and about 50.4°.

Example A4

Example A1 was repeated except that the used amount of bauxite was reduced so that the non-precious metal active component comprised 50wt% of the prepared semi-finished catalyst microsphere product. Specifically, 20g as the mass of $Al_2O_3$ of bauxite and 20g of the active metal precursor were used to produce catalyst A4.

XRD analysis was performed on fresh catalyst A4. In the XRD spectrum, there were characteristic peaks at $2\theta$=about 33.0°, about 33.5° and about 47.5° as well as at $2\theta$=about 27.0°, about 28.0° and about 39.5°.

Catalyst A4 was exposed to an atmosphere containing $SO_2$ for 5 mins, wherein the atmosphere containing $SO_2$ had a temperature of 400°C, a pressure of 0 MPa, and an $SO_2$ content of 0.001 vol%. After exposure to $SO_2$ treatment, XRD analysis was performed on catalyst A4. In the XRD spectrum of catalyst A4, there were characteristic peaks at $2\theta$=about 28.6°, about 30.0° and about 50.4°.

Example A5

350mL of deionized water was added to a beaker, and then 34g as the mass of La2O3 of lanthanum nitrate, 1g as the mass of $Co_2O_3$ of cobalt nitrate were added under stirring until completely dissolved. Ammonium carbonate (52.5g) was added to deionized water (210mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of hydrochloric acid (36 wt%) were added. The resulting mixture was slurrified. 20g of the active metal precursor was weighed and added to the acidified support and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.003g) of the palladium chloride solution was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst A5.

XRD analysis was performed on fresh catalyst A5. In the XRD spectrum, there were characteristic peaks at $2\theta$=about 33.0°, about 33.5° and about 47.5° as well as at $2\theta$=about 27.0°, about 28.0° and about 39.5°.

Catalyst A5 was exposed to an atmosphere containing $SO_2$ for 5 mins, wherein the atmosphere containing $SO_2$ had a temperature of 400°C, a pressure of 0 MPa, and an $SO_2$ content of 0.001 vol%. After exposure to $SO_2$ treatment, XRD analysis was performed on catalyst A5. In the XRD spectrum of catalyst A5, there were characteristic peaks at $2\theta$=about 28.6°, about 30.0° and about 50.4°.

Example A6

440mL of deionized water was added to a beaker, and then 22g as the mass of La2O3 of lanthanum nitrate, 22g as the mass of $Co_2O_3$ of cobalt nitrate were added under stirring until completely dissolved. Ammonium carbonate (66g) was added to deionized water (264mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of hydrochloric acid (36 wt%) were added. The resulting mixture was slurrified. 20g of the active metal precursor was weighed and added to the acidified support and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.003g) of the palladium chloride solution was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst A6.

XRD analysis was performed on fresh catalyst A6. In the XRD spectrum, there were characteristic peaks at $2\theta$=about 33.0°, about 33.5° and about 47.5° as well as at $2\theta$=about 27.0°, about 28.0° and about 39.5°.

Catalyst A6 was exposed to an atmosphere containing $SO_2$ for 5 mins, wherein the atmosphere containing $SO_2$ had a temperature of 400°C, a pressure of 0 MPa, and an $SO_2$ content of 0.001 vol%. After exposure to $SO_2$ treatment, XRD analysis was performed on catalyst A6. In the XRD spectrum of catalyst A6, there were characteristic peaks at $2\theta$=about 28.6°, about 30.0° and about 50.4°.

Example A7

Example A1 was repeated except that the palladium chloride solution was replaced with the equal concentration of a ruthenium chloride solution, and the content of precious metal in the prepared catalyst remained unchanged to produce Catalyst A7.

Example A8

Example A1 was repeated except that as oxide, lanthanum nitrate was replaced with the equal mass of cerium nitrate; and as oxide, cobalt nitrate was replaced with the equal mass of ferric nitrate to produce Catalyst A8.

Comparative Example 1

30g as the mass of La2O3 of lanthanum nitrate was dissolved in a beaker. 45g of ammonium carbonate was completely dissolved in another beaker. The lanthanum nitrate solution under stirring was added to the ammonium carbonate solution under stirring, and a certain amount of ammonia water was added to maintain the pH value of the solution at 9. The resulting mixture was suction-filtered. The filter cake mixture obtained by suction filtering was dried at 120°C, calcined at 700°C in an air atmosphere for 6 hours, and then ground to obtain an active metal precursor L.

5g as the mass of $Co_2O_3$ of cobalt nitrate was dissolved in a beaker. 7.5g of ammonium carbonate was completely dissolved in another beaker. The cobalt nitrate solution under stirring was added to the ammonium carbonate solution under stirring, and a certain amount of ammonia water was added to maintain the pH value of the solution at 9. The resulting mixture was suction-filtered. The filter cake mixture obtained by suction filtering was dried at 120°C, calcined at 700°C in an air atmosphere for 6 hours, and then ground to obtain an active metal precursor C.

The active metal precursor L and the active metal precursor C obtained in the first two steps were fully mechanically mixed to produce a mixed precursor.

40g as the mass of $Al_2O_3$ of bauxite was weighed, and 380mL of water and 6g of concentrated hydrochloric acid (36 wt%) were added. The resulting mixture was slurrified. 20g of the mixed precursor was weighed and added to the acidified inorganic oxide matrix and the resulting mixture was stirred. The slurry was dried at 120°C, then calcined in an air atmosphere at 700°C for 4 hours to produce Catalyst E1.

Comparative Example 2

The catalyst was prepared as follows: 15g of OX50 (SiO2) powder was weighed, and a certain amount (the Pd equivalent mass of 0.0045g) of the palladium chloride solution prepared in Example A1 was taken. The palladium chloride solution was added to the OX50 powder and mixed evenly by stirring continuously. The resulting mixture was placed in an oven at 120°C until dry, and calcined at 700°C in an air atmosphere for 4 hours to produce Catalyst E2.

Comparative Example 3

30g of La2O3 and 5g of $Co_2O_3$ were fully and mechanically mixed to obtain a mixed precursor.
40g as the mass of $Al_2O_3$ of bauxite was weighed, and 380mL of water and 6g of concentrated hydrochloric acid (36 wt%) were added. The resulting mixture was slurrified. 20g of the mixed precursor was weighed and added to the acidified inorganic oxide matrix and the resulting mixture was stirred. The slurry was dried at 120°C, then calcined in an air atmosphere at 700°C for 4 hours to produce Catalyst E3.

Comparative Example 4

A comparative catalyst was prepared according to the method described in CN110787834A. Alumina, kaolin, Mg, B, La, Pt, Ti, alumina sol, and ethyl acetate were weighed according to the proportions in Table 2 and mixed. 5 fold water was added and the mixture was impregnated at 85°C for more than 3 hours. After impregnation, the mixture was stirred for 3 hours at 85°C to disperse evenly. The above slurry was spray-dried at 300°C, and sieved to obtain particles of $\leq 200\ \mu m$. The obtained particles were calcined at 500°C for 4 hours to obtain an active metal precursor. The resulting active metal precursor was fully ground, pressed into tablets, and sieved to produce the final catalyst, marked as E4.

Table 2: Mass percentage of each raw material in Comparative Example 4

| Alumina | 65 |
|---|---|
| Kaolin | 18 |
| Mg | 2 |
| B | 2 |
| La | 3.5 |
| Pt | 0.5 |
| Ti | 4 |
| Alumina sol | 4 |
| Ethyl acetate | 1 |

Example B1

S1. Preparation of active metal precursor: 360mL of deionized water was added to a beaker, and then 30g as the mass of La2O3 of lanthanum nitrate, 3.5g as the mass of $Co_2O_3$ of cobalt nitrate and 2.5g as the mass of MnO of manganese chloride were added under stirring until completely dissolved. Ammonium carbonate54g was added to deionized water (215mL), and the mixture was stirred until completely dissolved. The metal nitrate mixed solution was added to the ammonium carbonate solution while stirring, and a certain amount of ammonia water was added to maintain the pH value of the solution at 9.
The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.
S2. Preparation of semi-finished catalyst product: 40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product. S3. Preparation of Catalyst: A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst B1.

XRD analysis was performed on fresh catalyst B1. In the XRD spectrum, there were characteristic peaks at $2\theta$=about 33.0°, about 33.5° and about 47.5° as well as at $2\theta$=about 27.0°, about 28.0° and about 39.5°.

Catalyst B1 was exposed to an atmosphere containing $SO_2$ for 30mins, wherein the atmosphere containing $SO_2$ had a temperature of 650°C, a pressure of 0.05 MPa, and an $SO_2$ content of 0.01 vol%. After exposure to $SO_2$ treatment, XRD analysis was performed on catalyst B1. In the XRD spectrum of catalyst B1, there were characteristic peaks at $2\theta$=about 28.6°, about 30.0° and about 50.4°.

Example B2

S1. Preparation of active metal precursor: 150mL of deionized water was added to a beaker, and then 10g as the mass of La2O3 of lanthanum nitrate, 1.6g as the mass of $Co_2O_3$ of cobalt nitrate and 3.4g as the mass of MnO of manganese chloride were added under stirring until completely dissolved. Ammonium carbonate (22.5g) was added to deionized water (90mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

S2. Preparation of semi-finished catalyst product: 40g as the mass of $Al_2O_3$ of bauxite was weighed, and 330mL of water and 6g of concentrated hydrochloric acid (36 wt%) were added. The resulting mixture was slurrified. 10g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 20wt% of the prepared semi-finished catalyst microsphere product. S3. Preparation of Catalyst: A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst B2.

Example B3

S1. Preparation of active metal precursor: 360mL of deionized water was added to a beaker, and then 30g as the mass of La2O3 of lanthanum nitrate, 2.6g as the mass of $Co_2O_3$ of cobalt nitrate and 3.4g as the mass of MnO of manganese chloride were added under stirring until completely dissolved. Ammonium carbonate54g was added to deionized water (215mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

S2. Preparation of semi-finished catalyst product: 40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product. S3. Preparation of Catalyst: A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst B3.

XRD analysis was performed on fresh catalyst B3. In the XRD spectrum, there were characteristic peaks at $2\theta$=about 33.0°, about 33.5° and about 47.5° as well as at $2\theta$=about 27.0°, about 28.0° and about 39.5°.

Catalyst B3 was exposed to an atmosphere containing $SO_2$ for 30mins, wherein the atmosphere containing $SO_2$ had a temperature of 650°C, a pressure of 0.05 MPa, and an $SO_2$ content of 0.01 vol%. After exposure to $SO_2$ treatment, XRD analysis was performed on catalyst B3. In the XRD spectrum of catalyst B3, there were characteristic peaks at $2\theta$=about 28.6°, about 30.0° and about 50.4°.

Example B4

Example B1 was repeated except that the used amount of bauxite was reduced so that the non-precious metal active component comprised 50wt% of the prepared semi-finished catalyst microsphere product.

Specifically, S1. Preparation of active metal precursor: 360mL of deionized water was added to a beaker, and then 30g as the mass of La2O3 of lanthanum nitrate, 3.5g as the mass of $Co_2O_3$ of cobalt nitrate and 2.5g as the mass of MnO of manganese chloride were added under stirring until completely dissolved. Ammonium carbonate54g was added to deionized water (215mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

S2. Preparation of semi-finished catalyst product: 20g as the mass of $Al_2O_3$ of bauxite was weighed, and 240mL of water and 3g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 50wt% of the prepared semi-finished catalyst microsphere product. S3. Preparation of Catalyst: A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0060g) of the palladium chloride solution having a concentration of 5.6g/L was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst B4.

XRD analysis was performed on fresh catalyst B4. In the XRD spectrum, there were characteristic peaks at $2\theta$=about 33.0°, about 33.5° and about 47.5° as well as at $2\theta$=about 27.0°, about 28.0° and about 39.5°.

Catalyst B4 was exposed to an atmosphere containing $SO_2$ for 30mins, wherein the atmosphere containing $SO_2$ had a temperature of 650°C, a pressure of 0.05 MPa, and an $SO_2$ content of 0.01 vol%. After exposure to $SO_2$ treatment, XRD analysis was performed on catalyst B4. In the XRD spectrum of catalyst B4, there were characteristic peaks at $2\theta$=about 28.6°, about 30.0° and about 50.4°.

Example B5

S 1. Preparation of active metal precursor: 340mL of deionized water was added to a beaker, and then 30g as the mass of La2O3 of lanthanum nitrate, 1g as the mass of $Co_2O_3$ of cobalt nitrate and 3g as the mass of MnO of manganese chloride were added under stirring until completely dissolved. Ammonium carbonate51g was added to deionized water (205mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

S2. Preparation of semi-finished catalyst product: 40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product. S3. Preparation of Catalyst: A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst B5.

Example B6

S1. Preparation of active metal precursor: 330mL of deionized water was added to a beaker, and then 15g as the mass of La2O3 of lanthanum nitrate, 15g as the mass of $Co_2O_3$ of cobalt nitrate and 3g as the mass of MnO of manganese chloride were added under stirring until completely dissolved. Ammonium carbonate (49.5g) was added to deionized water (200mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

S2. Preparation of semi-finished catalyst product: 40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product. S3. Preparation of Catalyst: A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst B6.

XRD analysis was performed on fresh catalyst B6. In the XRD spectrum, there were characteristic peaks at 2θ=about 33.0°, about 33.5° and about 47.5° as well as at 2θ=about 27.0°, about 28.0° and about 39.5°.

Catalyst B6 was exposed to an atmosphere containing $SO_2$ for 30mins, wherein the atmosphere containing $SO_2$ had a temperature of 650°C, a pressure of 0.05 MPa, and an $SO_2$ content of 0.01 vol%. After exposure to $SO_2$ treatment, XRD analysis was performed on catalyst B6. In the XRD spectrum of catalyst B6, there were characteristic peaks at 2θ=about 28.6°, about 30.0° and about 50.4°.

Example B7

S1. Preparation of active metal precursor: 365mL of deionized water was added to a beaker, and then 30g as the mass of La2O3 of lanthanum nitrate, 3.5g as the mass of $Co_2O_3$ of cobalt nitrate and 3g as the mass of MnO of manganese chloride were added under stirring until completely dissolved. Ammonium carbonate (54.75g) was added to deionized water (220mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

S2. Preparation of semi-finished catalyst product: 40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product. S3. Preparation of Catalyst: A precursor of Ru was dissolved in a diluted hydrochloric acid at 1:1, and the resulting mixture was diluted with deionized water to produce a ruthenium chloride solution having a concentration of 5.6g/L and pH=2. 15g of the semi-finished catalyst microsphere product was taken, and a certain amount (the Ru equivalent mass of 0.0045g) of the ruthenium chloride solution having a concentration of 5.6g/L was taken. The Ru-containing solution as impregnation solution was impregnated to the above-mentioned semi-finished catalyst product to produce a solid product, then the solid product was dried at 120°C, then calcined in an air atmosphere at 700°C for 4 hours to produce catalyst B7.

Example B8

S 1. Preparation of active metal precursor: 365mL of deionized water was added to a beaker, and then 30g as the mass of CeO2 of cerium nitrate, 3.5g as the mass of Fe2O3 of ferric nitrate and 3g as the mass of MnO of manganese chloride were added under stirring until completely dissolved. Ammonium carbonate (54.75g) was added to deionized water (220mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

S2. Preparation of semi-finished catalyst product: 40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product. S3. Preparation of Catalyst: A precursor of Pd was dissolved in a diluted hydrochloric acid at 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The Pd-containing solution as impregnation solution was impregnated to the above-mentioned semi-finished catalyst product to produce a solid product, then the solid product was dried at 120°C, then calcined in an air atmosphere at 700°C for 4 hours to produce catalyst B8.

Example C1

390mL of deionized water was added to a beaker, and then 30g as the mass of La2O3 of lanthanum nitrate, 4g as the mass of MgO of magnesium nitrate, 5.5g as the mass of $Co_2O_3$ of cobalt nitrate were added under stirring until completely dissolved. Ammonium carbonate (59.25g) was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst C1.

XRD analysis was performed on fresh catalyst C1. In the XRD spectrum, there were characteristic peaks at $2\theta$=about 33.0°, about 33.5° and about 47.5° as well as at $2\theta$=about 27.0°, about 28.0° and about 39.5°.

Catalyst C1 was exposed to an atmosphere containing $SO_2$ for 240 minutes, wherein the atmosphere containing $SO_2$ had a temperature of 750°C, a pressure of 0.1 MPa, and an $SO_2$ content of 0.02 vol%. After exposure to $SO_2$ treatment, XRD analysis was performed on catalyst C1. In the XRD spectrum of catalyst C1, there were characteristic peaks at $2\theta$=about 28.6°, about 30.0° and about 50.4°.

Example C2

220mL of deionized water was added to a beaker, and then 10g as the mass of La2O3 of lanthanum nitrate, 7g as the mass of MgO of magnesium nitrate, 5g as the mass of $Co_2O_3$ of cobalt nitrate and were added under stirring until completely dissolved. Ammonium carbonate (33g) was added to deionized water (150mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 330mL of water and 6g of concentrated hydrochloric acid (36 wt%) were added. The resulting mixture was slurrified. 10g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 20wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst C-2.

Example C3

390mL of deionized water was added to a beaker, and then 30g as the mass of La2O3 of lanthanum nitrate, 5g as the mass of MgO of magnesium nitrate, 4g as the mass of $Co_2O_3$ of cobalt nitrate were added under stirring until completely dissolved. Ammonium carbonate (58.5g) was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified.

20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst C-3.

XRD analysis was performed on fresh catalyst C3. In the XRD spectrum, there were characteristic peaks at $2\theta$=about 33.0°, about 33.5° and about 47.5° as well as at $2\theta$=about 27.0°, about 28.0° and about 39.5°.

Catalyst C3 was exposed to an atmosphere containing $SO_2$ for 240mins, wherein the atmosphere containing $SO_2$ had a temperature of 750°C, a pressure of 0.1 MPa, and an $SO_2$ content of 0.02 vol%. After exposure to $SO_2$ treatment, XRD analysis was performed on catalyst C3. In the XRD spectrum of catalyst C3, there were characteristic peaks at $2\theta$=about 28.6°, about 30.0° and about 50.4°.

Example C4

Example C1 was repeated except that the used amount of bauxite was reduced, so that the non-precious metal active component comprised 50wt% of the prepared semi-finished catalyst microsphere product, i.e., 20g as the mass of $Al_2O_3$ of bauxite and 20g of the active metal precursor, were used to produce catalyst C4.

XRD analysis was performed on fresh catalyst C4. In the XRD spectrum, there were characteristic peaks at $2\theta$=about 33.0°, about 33.5° and about 47.5° as well as at $2\theta$=about 27.0°, about 28.0° and about 39.5°.

Catalyst C4 was exposed to an atmosphere containing $SO_2$ for 240mins, wherein the atmosphere containing

$SO_2$ had a temperature of 750°C, a pressure of 0.1 MPa, and an $SO_2$ content of 0.02 vol%. After exposure to $SO_2$ treatment, XRD analysis was performed on catalyst C4. In the XRD spectrum of catalyst C4, there were characteristic peaks at 2θ=about 28.6°, about 30.0° and about 50.4°.

Example C5

390mL of deionized water was added to a beaker, and then 34g as the mass of La2O3 of lanthanum nitrate, 4g as the mass of MgO of magnesium nitrate, 1g as the mass of $Co_2O_3$ of cobalt nitrate were added under stirring until completely dissolved. Ammonium carbonate (58.5g) was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst C5.

Example C6

480mL of deionized water was added to a beaker, and then 22g as the mass of La2O3 of lanthanum nitrate, 4g as the mass of MgO of magnesium nitrate, 22g as the mass of $Co_2O_3$ of cobalt nitrate were added under stirring until completely dissolved. Ammonium carbonate (72g) was added to deionized water (300mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst C6.

XRD analysis was performed on fresh catalyst C6. In the XRD spectrum, there were characteristic peaks at 2θ=about 33.0°, about 33.5° and about 47.5° as well as at 2θ=about 27.0°, about 28.0° and about 39.5°.

Catalyst C6 was exposed to an atmosphere containing $SO_2$ for 240mins, wherein the atmosphere containing $SO_2$ had a temperature of 750°C, a pressure of 0.1 MPa, and an $SO_2$ content of 0.02 vol%. After exposure to $SO_2$ treatment, XRD analysis was performed on catalyst C6. In the XRD spectrum of catalyst C6, there were characteristic peaks at 2θ=about 28.6°, about 30.0° and about 50.4°.

Example C7

Example C1 was repeated except that the palladium chloride solution was replaced with the equal concentration of a ruthenium chloride solution, and the content of precious metal in the prepared catalyst remained unchanged to produce Catalyst C7.

Example C8

Example C1 was repeated except that as oxide, lanthanum nitrate was replaced with the equal mass of cerium nitrate; and as oxide, cobalt nitrate was replaced with the equal mass of ferric nitrate to produce Catalyst C8.

Example D1

420mL of deionized water was added to a beaker, and then 30g as the mass of La2O3 of lanthanum nitrate, 4g as the mass of MgO of magnesium nitrate, 5g as the mass of $Co_2O_3$ of cobalt nitrate and 3g as the mass of MnO of manganese chloride were added under stirring until completely dissolved. Ammonium carbonate63g was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst D1.

XRD analysis was performed on fresh catalyst D1. In the XRD spectrum, there were characteristic peaks at $2\theta$=about 33.0°, about 33.5° and about 47.5° as well as at $2\theta$=about 27.0°, about 28.0° and about 39.5°.

Catalyst D1 was exposed to an atmosphere containing $SO_2$ for 480mins, wherein the atmosphere containing $SO_2$ had a temperature of 800°C, a pressure of 0.2 MPa, and an $SO_2$ content of 0.02 vol%. After exposure to $SO_2$ treatment, XRD analysis was performed on catalyst D1. In the XRD spectrum of catalyst D1, there were characteristic peaks at $2\theta$=about 28.6°, about 30.0° and about 50.4°.

Example D2

250mL of deionized water was added to a beaker, and then 10g as the mass of La2O3 of lanthanum nitrate, 7g as the mass of MgO of magnesium nitrate, 5g as the mass of $Co_2O_3$ of cobalt nitrate and 3g as the mass of MnO of manganese chloride were added under stirring until completely dissolved. Ammonium carbonate (37.5g) was added to deionized water (150mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 10g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 20wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst D-2.

Example D3

410mL of deionized water was added to a beaker, and then 30g as the mass of La2O3 of lanthanum nitrate, 5g as the mass of MgO of magnesium nitrate, 2.6g as the mass of $Co_2O_3$ of cobalt nitrate and 3.4g as the mass of MnO of manganese chloride were added under stirring until completely dissolved. Ammonium carbonate (61.5g) was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst D-3.

Example D4

Example D1 was repeated except that the used amount of bauxite was reduced, so that the non-precious metal active component comprised 50wt% of the prepared semi-finished catalyst microsphere product.

Specifically: 420mL of deionized water was added to a beaker, and then 30g as the mass of La2O3 of lanthanum nitrate, 4g as the mass of MgO of magnesium nitrate, 5g as the mass of $Co_2O_3$ of cobalt nitrate and 3g as the mass of MnO of manganese chloride were added under stirring until completely dissolved. Ammonium carbonate 63g was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

20g as the mass of $Al_2O_3$ of bauxite was weighed, and 240mL of water and 3g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 50wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0060g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst D4.

XRD analysis was performed on fresh catalyst D4. In the XRD spectrum, there were characteristic peaks at $2\theta$=about 33.0°, about 33.5° and about 47.5° as well as at $2\theta$=about 27.0°, about 28.0° and about 39.5°.

Catalyst D4 was exposed to an atmosphere containing $SO_2$ for 480mins, wherein the atmosphere containing $SO_2$ had a temperature of 800°C, a pressure of 0.2 MPa, and an $SO_2$ content of 0.02 vol%. After exposure to $SO_2$ treatment, XRD analysis was performed on catalyst D4. In the XRD spectrum of catalyst D4, there were characteristic peaks at $2\theta$=about 28.6°, about 30.0° and about 50.4°.

Example D5

420mL of deionized water was added to a beaker, and then 34g as the mass of La2O3 of lanthanum nitrate, 4g as the mass of MgO of magnesium nitrate, 1g as the mass of $Co_2O_3$ of cobalt nitrate and 3g as the mass of MnO of manganese chloride were added under stirring until completely dissolved. Ammonium carbonate63g was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0030g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst D5.

Example D6

510mL of deionized water was added to a beaker, and then 22g as the mass of La2O3 of lanthanum nitrate, 4g as the mass of MgO of magnesium nitrate, 22g as the mass of $Co_2O_3$ of cobalt nitrate and 3g as the mass of MnO of manganese chloride were added under stirring until completely dissolved. Ammonium carbonate (76.5g) was added to deionized water (300mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst D6.

Example D7

420mL of deionized water was added to a beaker, and then 30g as the mass of La2O3 of lanthanum nitrate, 4g as the mass of MgO of magnesium nitrate, 5g as the mass of $Co_2O_3$ of cobalt nitrate and 3g as the mass of MnO of manganese chloride were added under stirring until completely dissolved. Ammonium carbonate63g was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Ru was dissolved in a diluted hydrochloric acid at 1:1, and the resulting mixture was diluted with deionized water to produce a ruthenium chloride solution having a concentration of 5.6g/L. 15g of the semi-finished catalyst microsphere product was taken, and a certain amount (the Ru equivalent mass of 0.0045g) of the ruthenium chloride solution having a concentration of 5.6g/L was taken. The Ru-containing solution as impregnation solution was impregnated to the above-mentioned semi-finished catalyst product to produce a solid product, then the solid product was dried at 120°C, then calcined in an air atmosphere at 700°C for 4 hours to produce catalyst D7.

Example D8

420mL of deionized water was added to a beaker, and then 30g as the mass of CeO2 of cerium nitrate, 4g as the mass of MgO of magnesium nitrate, 5g as the mass of Fe2O3 of ferric nitrate and 3g as the mass of MnO of manganese chloride were added under stirring until completely dissolved. Ammonium carbonate63g was added to deionized water (250mL), and the mixture was stirred until completely dissolved. The metal nitrate mixed solution was added to the ammonium carbonate solution while stirring, and a certain amount of ammonia water was added to maintain the pH value of the solution at 9.

The completely precipitated mixture was suction-filtered and rinsed with deionized water. The filter cake mixture obtained by suction filtering was dried at 120°C, calcined at 700°C in an air atmosphere for 6 hours, and then ground to obtain an active metal precursor.

40g as the mass of $Al_2O_3$ of bauxite was weighed, and 380mL of water and 6g of concentrated hydrochloric acid (36 wt%) were added. The resulting mixture was slurrified. 20g of the active metal precursor was weighed and added to the acidified inorganic oxide matrix and the resulting mixture was stirred. The slurry was dried at 200°C, then calcined in an air atmosphere at 700°C for 4 hours to produce a semi-finished catalyst microsphere product. The non-precious metal active component comprised 33wt% of the prepared semi-finished catalyst microsphere product.

A precursor of Pd was dissolved in a diluted hydrochloric acid at a mass ratio of 1:1, and the resulting mixture was diluted with deionized water to produce a palladium chloride solution having a concentration of 5.6g/L and pH=2. 15g of the semi-finished catalyst microsphere product was taken, and a certain amount (the Pd equivalent mass of 0.0045g) of the palladium chloride solution having a concentration of 5.6g/L was taken. The palladium chloride solution as impregnation solution was impregnated to the above-mentioned semi-finished catalyst microsphere product to produce a solid product, then the solid product was dried at 120°C, then calcined in an air atmosphere at 700°C for 4 hours to produce catalyst D8.

Performance Testing

Determination of the contents of components: the contents of components in catalysts prepared in Examples were determined using the X-ray fluorescence spectroscopy (XRF). For details, see Petrochemical Analysis Methods (RIPP Experimental Methods), edited by Yang Cuiding et al., published by Science Press in 1990. The specific results are shown in Table 3 below.

Table 3: Compositions of catalysts (weight percentage, %)

| Ex. | Support /matrix | Rare earth group metal | Groups VB, VIII, IB, IIB /Group VIII non-precious metal | Precious metal | Group VIIB non-precious metal | Group IIA metal |
|------|------|------|------|------|------|------|
| A1 | 66.67 | 28.57 | 4.76 | 0.03 | | |
| A2 | 80 | 16 | 4 | 0.02 | | |
| A3 | 66.67 | 30.21 | 3.12 | 0.02 | | |

(continued)

| Ex. | Support /matrix | Rare earth group metal | Groups VB, VIII, IB, IIB /Group VIII non-precious metal | Precious metal | Group VIIB non-precious metal | Group IIA metal |
|---|---|---|---|---|---|---|
| A4 | 50 | 42.86 | 7.14 | 0.03 | | |
| A5 | 66.67 | 32.38 | 0.95 | 0.02 | | |
| A6 | 66.67 | 16.67 | 16.67 | 0.02 | | |
| A7 | 66.67 | 28.57 | 4.76 | 0.03 | | |
| A8 | 66.67 | 28.57 | 4.76 | 0.03 | | |
| B1 | 66.67 | 27.78 | 3.24 | 0.03 | 2.31 | |
| B2 | 80 | 13.33 | 2.13 | 0.02 | 4.53 | |
| B3 | 66.67 | 27.78 | 2.41 | 0.02 | 3.15 | |
| B4 | 50 | 41.67 | 4.86 | 0.04 | 3.47 | |
| B5 | 66.67 | 29.41 | 0.98 | 0.02 | 2.94 | |
| B6 | 66.67 | 15.15 | 15.15 | 0.03 | 3.03 | |
| B7 | 66.67 | 27.4 | 3.2 | 0.03 | 2.74 | |
| B8 | 66.67 | 27.4 | 3.2 | 0.03 | 2.74 | |
| C1 | 66.67 | 25.31 | 4.64 | 0.03 | | 3.38 |
| C2 | 80 | 9.09 | 4.55 | 0.02 | | 6.36 |
| C3 | 66.67 | 25.64 | 3.42 | 0.02 | | 4.27 |
| C4 | 50 | 38.46 | 6.41 | 0.03 | | 5.13 |
| C5 | 66.67 | 29.06 | 0.85 | 0.02 | | 3.42 |
| C6 | 66.67 | 15.28 | 15.28 | 0.03 | | 2.78 |
| C7 | 66.67 | 25.31 | 4.64 | 0.03 | | 3.38 |
| C8 | 66.67 | 25.31 | 4.64 | 0.03 | | 3.38 |
| D1 | 66.67 | 23.81 | 3.97 | 0.03 | 2.38 | 3.17 |
| D2 | 80 | 8 | 4 | 0.02 | 2.4 | 5.6 |
| D3 | 66.67 | 24.39 | 2.11 | 0.02 | 2.76 | 4.07 |
| D4 | 50 | 35.71 | 5.95 | 0.04 | 3.57 | 4.76 |
| D5 | 66.67 | 26.98 | 0.79 | 0.02 | 2.38 | 3.17 |
| D6 | 66.67 | 14.38 | 14.38 | 0.03 | 1.96 | 2.61 |
| D7 | 66.67 | 23.81 | 3.97 | 0.03 | 2.38 | 3.17 |
| D8 | 66.67 | 23.81 | 3.97 | 0.03 | 2.38 | 3.17 |

Activity evaluation: in the present invention, the evaluation standard of the catalyst activity was the concentration changes of SOx and NOx in the reaction product. The SOx and NOx contents in the product were measured using an FT-IR Fourier transform infrared flue gas analyzer. A fixed-bed micro-reactor was used as the experimental device for the evaluation. The evaluation results for the catalyst activity were expressed as conversion rate.
Calculation method for the conversion rate:

$$X=[C_{inlet}-C_{outlet}]/C_{inlet}\times100\%$$

wherein, $C_{inlet}$ refers to the concentration of SOx or NOx at the inlet of the experimental device; $C_{outlet}$ refers to the

concentration of SOx or NOx at the outlet of the experimental device.

The catalysts provided in the above examples and comparative examples were evaluated for their effects in simultaneously reducing the emissions of both NO and $SO_2$ in flue gas. The catalytic cracking reaction-regeneration evaluation was carried out on a small fixed-bed simulated flue gas device. The catalyst was loaded in an amount of 1.5g, and placed in a quartz tube fixed-bed reactor with an inner diameter of 16.8mm. the catalyst bed was filled with quartz fiber and quartz sand (20-40 mesh) at both ends so that the catalyst bed was fixed in the constant temperature section in the middle of the reactor. The reaction temperature was 680°C, and the reaction pressure was 0.03MPa. The feedstock gas had a volume flow rate (STP, standard temperature and pressure) of 1500 mL/min, and a volumetric hourly space velocity of about 15000 $h^{-1}$. After the reactor temperature stabilized, the catalyst was first pre-treated in an N2 atmosphere for 30min to fully remove adsorbed species on the catalyst surface. At the beginning of the reaction, the feedstock gas contained 1200 ppm vol% of NO, 1200 ppm vol% of $SO_2$, and the balance of $N_2$. The gas products were analyzed by an online infrared to obtain the concentrations of $SO_2$ and NO after the reaction. The results with the evaluation time of 0.5h are listed in Table 4. The results with the evaluation time of 1.5h are listed in Table 5. In Tables 4 and 5, Alone-NO and Alone-$SO_2$ referred to that the feedstock gas only contained 1200 ppm vol% of NO or 1200 ppm vol% of $SO_2$ respectively.

Table 4: Performance comparison of different catalysts within 0.5h

| 0.5h total conversion (%) | Combination-NO | Combination-$SO_2$ | Alone-NO | Alone-$SO_2$ |
|---|---|---|---|---|
| Catalyst A1 | 63 | 52 | <2 | 42 |
| Catalyst A2 | 43 | 24 | <2 | 21 |
| Catalyst A3 | 51 | 42 | <2 | 39 |
| Catalyst A4 | 75 | 63 | <2 | 53 |
| Catalyst A5 | 37 | 47 | <2 | 46 |
| Catalyst A6 | 31 | 37 | <2 | 36 |
| Catalyst A7 | 59 | 50 | <2 | 40 |
| Catalyst A8 | 54 | 49 | <2 | 42 |
| Catalyst B1 | 78 | 53 | <2 | 43 |
| Catalyst B2 | 53 | 28 | <2 | 22 |
| Catalyst B3 | 61 | 46 | <2 | 40 |
| Catalyst B4 | 87 | 65 | <2 | 55 |
| Catalyst B5 | 43 | 47 | <2 | 46 |
| Catalyst B6 | 34 | 38 | <2 | 37 |
| Catalyst B7 | 72 | 51 | <2 | 41 |
| Catalyst B8 | 67 | 51 | <2 | 44 |
| Catalyst C1 | 65 | 70 | <2 | 60 |
| Catalyst C2 | 44 | 50 | <2 | 47 |
| Catalyst C3 | 53 | 60 | <2 | 57 |
| Catalyst C4 | 79 | 73 | <2 | 63 |
| Catalyst C5 | 38 | 62 | <2 | 61 |
| Catalyst C6 | 31 | 51 | <2 | 50 |
| Catalyst C7 | 61 | 67 | <2 | 57 |
| Catalyst C8 | 56 | 69 | <2 | 62 |
| Catalyst D1 | 71 | 72 | <2 | 62 |
| Catalyst D2 | 50 | 53 | <2 | 50 |
| Catalyst D3 | 57 | 63 | <2 | 60 |

(continued)

| 0.5h total conversion (%) | Combination-NO | Combination-SO$_2$ | Alone-NO | Alone-SO$_2$ |
|---|---|---|---|---|
| Catalyst D4 | 92 | 78 | <2 | 68 |
| Catalyst D5 | 46 | 66 | <2 | 65 |
| Catalyst D6 | 31 | 56 | <2 | 55 |
| Catalyst D7 | 65 | 70 | <2 | 60 |
| Catalyst D8 | 59 | 72 | <2 | 65 |
| Catalyst E1 | <2 | 33 | <2 | 32 |
| Catalyst E2 | 10 | <2 | 10 | <2 |
| Catalyst E3 | 5 | 7 | <2 | 7 |
| Catalyst E4 | 4 | 24 | 5 | 23 |

Table 5: Performance comparison of different catalysts within 1.5h

| 1.5h total conversion (%) | Combination-NO | Combination-SO$_2$ | Alone-NO | Alone-SO$_2$ |
|---|---|---|---|---|
| Catalyst A1 | 39 | 37 | <2 | 30 |
| Catalyst A2 | 28 | 19 | <2 | 17 |
| Catalyst A3 | 32 | 31 | <2 | 29 |
| Catalyst A4 | 46 | 45 | <2 | 38 |
| Catalyst A5 | 24 | 35 | <2 | 34 |
| Catalyst A6 | 21 | 28 | <2 | 27 |
| Catalyst A7 | 37 | 36 | <2 | 29 |
| Catalyst A8 | 34 | 36 | <2 | 31 |
| Catalyst B1 | 55 | 33 | <2 | 27 |
| Catalyst B2 | 39 | 19 | <2 | 15 |
| Catalyst B3 | 44 | 29 | <2 | 25 |
| Catalyst B4 | 61 | 39 | <2 | 33 |
| Catalyst B5 | 32 | 30 | <2 | 29 |
| Catalyst B6 | 26 | 25 | <2 | 24 |
| Catalyst B7 | 51 | 31 | <2 | 25 |
| Catalyst B8 | 48 | 32 | <2 | 27 |
| Catalyst C1 | 57 | 61 | <2 | 53 |
| Catalyst C2 | 43 | 48 | <2 | 46 |
| Catalyst C3 | 49 | 54 | <2 | 52 |
| Catalyst C4 | 68 | 63 | <2 | 55 |
| Catalyst C5 | 36 | 55 | <2 | 55 |
| Catalyst C6 | 29 | 45 | <2 | 44 |
| Catalyst C7 | 54 | 59 | <2 | 51 |
| Catalyst C8 | 50 | 61 | <2 | 55 |
| Catalyst D1 | 62 | 62 | <2 | 54 |

(continued)

| 1.5h total conversion (%) | Combination-NO | Combination-SO$_2$ | Alone-NO | Alone-SO$_2$ |
|---|---|---|---|---|
| Catalyst D2 | 48 | 50 | <2 | 48 |
| Catalyst D3 | 52 | 57 | <2 | 54 |
| Catalyst D4 | 78 | 67 | <2 | 59 |
| Catalyst D5 | 42 | 58 | <2 | 58 |
| Catalyst D6 | 29 | 49 | <2 | 48 |
| Catalyst D7 | 57 | 61 | <2 | 53 |
| Catalyst D8 | 52 | 62 | <2 | 57 |
| Catalyst E1 | <2 | 24 | <2 | 23 |
| Catalyst E2 | 8 | <2 | 8 | <2 |
| Catalyst E3 | 4 | 7 | <2 | 6 |
| Catalyst E4 | 3 | 15 | 4 | 18 |

The preferred embodiments of the present invention have been described in detail above, but the present invention is not limited thereto. Within the scope of the technical concept of the present invention, a variety of simple modifications can be made to technical solutions of the present invention, including combinations of various technical features in any other suitable manner. These simple modifications and combinations should also be regarded as the disclosed content of the present invention. All belong to the protection scope of the present invention.

**Claims**

1.  A catalyst capable of/for simultaneously reducing both SOx and NOx in flue gas, which is **characterized in that** the catalyst comprises the following components:
    (1) a support or inorganic oxide matrix, (2) a rare earth metal, (3) a non-precious metal selected from Group VIII, or non-precious metal(s) selected from Groups VB, VIII, IB, and IIB, (4) a precious metal, (5) optionally, a Group VIIB non-precious metal, (6) optionally, a Group IIA metal,

    wherein, based on the total weight of the catalyst,
    the content of the support or inorganic oxide matrix of component (1) as oxide is 25-95 wt%, e.g., 25-93 wt%, or 25-92 wt%, or 40-90 wt%, or 40-87 wt%, or 40-85 wt%, or 45-80 wt%, or 50-88 wt%, or 50-80 wt%;
    the content of the rare earth metal(s) of component (2) as oxide is 2-70 wt%, e.g., 4-60 wt%, or 4-50 wt%, or 4-40 wt%, or 6-70 wt%, or 8-50 wt%, or 8-40 wt%, or 12-60 wt%, or 12-48 wt%;
    the content of the non-precious metal selected from Group VIII or said non-precious metal(s) selected from Groups VB, VIII, IB, and IIB of component (3) as oxide is 1-30 wt%, e.g., 1-15 wt%, or 1-12 wt%, or 2-30 wt%, or 2-12 wt%, or 2-10 wt%, or 2-8 wt%, or 3-20 wt%, or 3-15 wt%;
    the content of the precious metal of component (4) as element is 0.01-2 wt%, e.g., 0.01-1.5 wt%, or 0.01-2 wt%, or 0.02-1.5 wt%, or 0.02-1.2 wt%, or 0.02-1.0 wt%; or 0.03-1.2 wt%; the content of the Group VIIB non-precious metal of component (5) as oxide is: 0 or 1-10 wt%, 0 or 1-8 wt%, 0 or 2-5 wt%;
    the content of the Group IIA metal of component (6) as oxide is 0 or 1-30 wt%, 0 or 1-20 wt%, 0 or 2-15 wt%;
    wherein, as metal element, the molar ratio of component (2) to component (3) is (0.4-18): 1, for example (0.4-12):1, or (0.5-15): 1, or (0.5-12):1, or (0.5-8):1, or (0.6-18):1, or (1-10):1, or (1-6):1, or (1-4):1, or (2-12):1, or (2-5):1, or (3-6):1;
    preferably, the sum of the content of the Group VIIB non-precious metal of component (5) as oxide and the content of the Group IIA metal of component (6) as oxide is not zero.

2.  The catalyst according to claim 1, wherein,

    the support or inorganic oxide matrix of component (1) is at least one of alumina, silica-alumina, zeolite, spinel, kaolin, diatomaceous earth, perlite, and perovskite, preferably alumina; and/or

the rare earth metal of component (2) is one or more of La, Ce, Pr and Nd, more preferably La and/or Ce; most preferably La; and/or

the non-precious metal selected from Group VIII of component (3) is Co and/or Fe, more preferably Co; or said non-precious metal(s) selected from Groups VB, VIII, IB, and IIB of component (3) is one or more of Fe, Co, Ni, Cu, Zn, and V, more preferably Co and/or Fe, most preferably Co; and/or

the precious metal of component (4) is one or more of Ru, Rh, Re, Pt, Pd, Ag, Ir, and Au, more preferably one or more of Pt, Pd and Rh, most preferably Pd; and/or

the Group VIIB non-precious metal of component (5) is Mn; and/or

the Group IIA metal of component (6) is one or more of Be, Mg, Ca, Sr and Ba, more preferably Mg.

3. The catalyst according to any one of the preceding claims, wherein

the catalyst comprises (1) a support and, loaded on the support, (2) a rare earth metal, (3) a non-precious metal selected from Group VIII, and (4) a precious metal;

wherein, based on the total weight of the catalyst,

the content of the support of component (1) is 25-95 wt%;

the content of the rare earth metal(s) of component (2) as oxide is 4-60 wt%;

the content of the non-precious metal selected from Group VIII of component (3) as oxide is 2-12 wt%;

the content of the precious metal of component (4) as element is 0.01-2 wt%;

or

the content of the support of component (1) is 40-90 wt%;

the content of the rare earth metal(s) of component (2) as oxide is 8-50 wt%;

the content of the non-precious metal selected from Group VIII of component (3) as oxide is 2-12 wt%;

the content of the precious metal of component (4) as element is 0.02-1.5 wt%;

or

the content of the support or inorganic oxide matrix of component (1) as oxide is 50-88 wt%;

the content of the rare earth metal(s) of component (2) as oxide is 8-40 wt%;

the content of the non-precious metal selected from Group VIII of component (3) as oxide is 2-10 wt%;

the content of the precious metal of component (4) as element is 0.03-1.2 wt%;

wherein, as metal element, the molar ratio of component (2) to component (3) is (0.5-15): 1, or (1-10):1, or (2-5):1.

4. The catalyst according to any one of the preceding claims, wherein the catalyst comprises (1) a support and, loaded on the support, (2) a rare earth metal, (3) non-precious metal(s) selected from Groups VB, VIII, IB, and IIB, (4) a precious metal, and (6) a Group IIA metal, wherein, based on the total weight of the catalyst,

the content of the support or inorganic oxide matrix of component (1) as oxide is 25-93 wt%;

the content of the rare earth metal(s) of component (2) as oxide is 4-60 wt%;

the content of the non-precious metal(s) selected from Groups VB, VIII, IB, and IIB of component (3) as oxide is 2-30 wt%;

the content of the precious metal of component (4) as element is 0.01-2 wt%;

the content of the Group IIA metal of component (6) as oxide is 1-30 wt%;

or

the content of the support or inorganic oxide matrix of component (1) as oxide is 40-87 wt%;

the content of the rare earth metal(s) of component (2) as oxide is 8-50 wt%;

the content of the non-precious metal(s) selected from Groups VB, VIII, IB, and IIB of component (3) as oxide is 3-20 wt%;

the content of the precious metal of component (4) as element is 0.02-1.5 wt%;

the content of the Group IIA metal of component (6) as oxide is 1-20 wt%;

or

the content of the support or inorganic oxide matrix of component (1) as oxide is 40-85 wt%;

the content of the rare earth metal(s) of component (2) as oxide is 8-40 wt%;

the content of the non-precious metal(s) selected from Groups VB, VIII, IB, and IIB of component (3) as oxide is 3-15 wt%;

the content of the precious metal of component (4) as element is 0.03-1.2 wt%;

the content of the Group IIA metal of component (6) as oxide is 2-15 wt%;

wherein, as metal element, the molar ratio of component (2) to component (3) is (0.4-18): 1, for example (0.4-12):1, or (0.5-8):1, or (1-4):1.

5. The catalyst according to any one of the preceding claims, wherein

   the catalyst comprises the following components: (1) a support or inorganic oxide matrix, (2) a rare earth metal, (3) non-precious metal(s) selected from Groups VB, VIII, IB, and IIB, (4) a precious metal, and (5) a Group VIIB non-precious metal,
   wherein, based on the total weight of the catalyst,
   the content of the support or inorganic oxide matrix of component (1) as oxide is 25-92 wt%;
   the content of the rare earth metal(s) of component (2) as oxide is 6-70 wt%;
   the content of the non-precious metal(s) selected from Groups VB, VIII, IB, and IIB of component (3) as oxide is 1-12 wt%;
   the content of the precious metal of component (4) as element is 0.01-1.5 wt%;
   the content of the Group VIIB non-precious metal of component (5) as oxide is: 1-10 wt%; or
   the content of the support or inorganic oxide matrix of component (1) as oxide is 40-85 wt%;
   the content of the rare earth metal(s) of component (2) as oxide is 12-60 wt%;
   the content of the non-precious metal(s) selected from Groups VB, VIII, IB, and IIB of component (3) as oxide is 2-10 wt%;
   the content of the precious metal of component (4) as element is 0.02-1.2 wt%;
   the content of the Group VIIB non-precious metal of component (5) as oxide is: 1-8 wt%; or
   the content of the support or inorganic oxide matrix of component (1) as oxide is 40-85 wt%;
   the content of the rare earth metal(s) of component (2) as oxide is 12-48 wt%;
   the content of the non-precious metal(s) selected from Groups VB, VIII, IB, and IIB of component (3) as oxide is 2-8 wt%;
   the content of the precious metal of component (4) as element is 0.02-1.0 wt%;
   the content of the Group VIIB non-precious metal of component (5) as oxide is: 2-5 wt%; wherein, as metal element, the molar ratio of component (2) to component (3) is (0.6-18): 1, e.g. (2-12):1, or (3-6):1.

6. The catalyst according to any one of the preceding claims, wherein
   the catalyst comprises the following components:
   (1) a support or inorganic oxide matrix, (2) a rare earth metal, (3) non-precious metal(s) selected from Groups VB, VIII, IB, and IIB, (4) a precious metal, (5) a Group VIIB non-precious metal, and (6) a Group IIA metal,

   wherein, based on the total weight of the catalyst,
   the content of the support or inorganic oxide matrix of component (1) as oxide is 25-95 wt%;
   the content of the rare earth metal(s) of component (2) as oxide is 2-70 wt%;
   the content of the non-precious metal(s) selected from Groups VB, VIII, IB, and IIB of component (3) as oxide is 1-15 wt%;
   the content of the precious metal of component (4) as element is 0.01-1.5 wt%;
   the content of the Group VIIB non-precious metal of component (5) as oxide is: 1-10 wt%; the content of the Group IIA metal of component (6) as oxide is 1-30 wt%;
   or
   the content of the support or inorganic oxide matrix of component (1) as oxide is 40-90 wt%;
   the content of the rare earth metal(s) of component (2) as oxide is 4-50 wt%;
   the content of the non-precious metal(s) selected from Groups VB, VIII, IB, and IIB of component (3) as oxide is 2-12 wt%;
   the content of the precious metal of component (4) as element is 0.02-1.2 wt%;
   the content of the Group VIIB non-precious metal of component (5) as oxide is: 1-8 wt%; the content of the Group IIA metal of component (6) as oxide is 1-20 wt%;
   or
   the content of the support or inorganic oxide matrix of component (1) as oxide is 50-80 wt%;
   the content of the rare earth metal(s) of component (2) as oxide is 4-40 wt%;
   the content of the non-precious metal(s) selected from Groups VB, VIII, IB, and IIB of component (3) as oxide is 2-10 wt%;
   the content of the precious metal of component (4) as element is 0.02-1.0 wt%;
   the content of the Group VIIB non-precious metal of component (5) as oxide is: 2-5 wt%; the content of the Group IIA metal of component (6) as oxide is 2-15 wt%;
   wherein, as metal element, the molar ratio of component (2) to component (3) is (0.4-18): 1, for example (0.5-12):1, or (1-6):1.

7. The catalyst according to any one of the preceding claims, wherein the catalyst is a catalyst that has been exposed to an atmosphere containing $SO_2$.

8. The catalyst according to any one of the preceding claims, wherein

    the rare earth metal(s) of component (2) comprises La;
    the non-precious metal selected from Group VIII or said non-precious metal(s) selected from Groups VB, VIII, IB, and IIB of component (3) comprises Co;
    the precious metal of component (4) comprises Pd;
    the Group VIIB non-precious metal of component (5), if any, comprises Mn;
    the Group IIA metal of component (6), if any, comprises Mg.

9. The catalyst according to any one of the preceding claims, wherein

    the rare earth metal(s) of component (2) is La;
    the non-precious metal selected from Group VIII or said non-precious metal(s) selected from Groups VB, VIII, IB, and IIB of component (3) is Co;
    the precious metal of component (4) is Pd;
    the Group VIIB non-precious metal of component (5), if any, is Mn;
    the Group IIA metal of component (6), if any, is Mg.

10. The catalyst according to any of the preceding claims 7-9, wherein the catalyst is a catalyst that has been exposed to an atmosphere containing $SO_2$, the catalyst has characteristic peaks at $2\theta=28.6°\pm0.1°$, $30.0°\pm0.1°$ and $50.4°\pm0.1°$ in the powder XRD spectrum.

11. The catalyst according to any of the preceding claims 8-9, wherein the catalyst has characteristic peaks at $2\theta=33.0°\pm0.1°$, $33.5°\pm0.1°$, and $47.5°\pm0.1°$, as well as $27.0°\pm0.1°$, $28.0°\pm0.1°$, and $39.5°\pm0.1°$ in the powder XRD spectrum.

12. A method for preparing a catalyst of any one of the preceding claims, which method comprises:

    (I) a co-precipitation method or a sol-gel method is used to produce an active metal precursor, wherein the active metal in the active metal precursor comprises (2) a rare earth metal, (3) a non-precious metal selected from Group VIII, or non-precious metal(s) selected from Groups VB, VIII, IB, and IIB, (5) optionally, a Group VIIB non-precious metal, and (6) optionally, a Group IIA metal; and
    (II) the active metal precursor and (1) the support or inorganic oxide matrix or a precursor thereof, and optionally a precursor of (4) the precious metal are mixed and slurrified to produce a slurry, the resulting slurry is dried and/or calcined to produce a catalyst; or
    the active metal precursor and (1) the support or inorganic oxide matrix or a precursor thereof, and optionally a precursor of (4) the precious metal are mixed and slurrified to produce a slurry, the resulting slurry is dried and/or calcined to produce a semi-finished catalyst product; then the semi-finished catalyst product is impregnated with a solution containing a precursor of (4) the precious metal as impregnation solution to produce a solid product, and then the solid product is dried and/or calcined to produce a catalyst;
    wherein the active metal precursor, the support or inorganic oxide matrix or the precursor thereof, and the precursor of the precious metal are used in such amounts that the produced catalyst has the composition of the catalyst of any of the preceding claims.

13. The preparation method according to any of the preceding claims, wherein in step (I), the co-precipitation method is used to produce the active metal precursor; preferably, the co-precipitation method comprises:

    (I-1) providing a first solution containing a precursor of (2) rare earth metal(s), a precursor of (3) non-precious metal selected from Group VIII or non-precious metal(s) selected from Groups VB, VIII, IB, and IIB, optionally a precursor of (5) Group VIIB non-precious metal, and optionally a precursor of (6) Group IIA metal; preferably, each precursor is independently selected from nitrate and/or chloride of each metal;
    (I-2) subjecting the first solution and a coprecipitant to carry out a coprecipitation reaction; preferably, the coprecipitant is a carbonate salt, further preferably at least one of ammonium carbonate, potassium carbonate and sodium carbonate;
    preferably, the coprecipitation reaction is carried out at pH=8-10;

(I-3) drying and/or calcining a soild product obtained in the coprecipitation reaction to produce an active metal precursor;

preferably, the condition for calcining in step (I-3) includes: the temperature is 300-800°C, e.g., 300-700°C, the time is 0.5-8h, e.g., 1-8h or 1-5h,

wherein, the support or inorganic oxide matrix or a precursor thereof, the precursor of rare earth metal(s), the precursor of non-precious metal selected from Group VIII or non-precious metal(s) selected from Groups VB, VIII, IB, and IIB, the precursor of precious metal, optionally the precursor of Group VIIB non-precious metal, and optionally the precursor of Group IIA metal are used in such amounts that the produced catalyst has the composition of the catalyst of any of the preceding claims.

14. The preparation method according to any one of the preceding claims, wherein

in step (II), the precursor of the precious metal component is at least one of nitrates, chlorides, and/or chlorates, e.g. at least one of palladium nitrate, palladium chloride, platinum chlorate and rhodium chloride, preferably palladium nitrate and/or palladium chloride; and/or

in step (II), the slurry has a solid content of 5-40 wt%, e.g., 6-38 wt%, or 7-35 wt%; and/or in step (II), the condition for calcining the slurry includes: the temperature is 300-800°C, e.g., 300-700°C, the time is 0.5-8h, e.g., 1-8h or 1-5h; and/or

in step (II), the precursor of precious metal is hydrolyzed in an acid solution to provide the impregnation solution; preferably, the acid is selected from water-soluble inorganic acids and/or organic acids, more preferably, at least one of hydrochloric acid, nitric acid, phosphoric acid, and acetic acid; preferably, the acid is used in such an amount that the pH value of the impregnation solution is less than 6.0, preferably less than 5.0, e.g. 2.0-5.0; preferably, the condition for calcining the solid product includes: the temperature is 300-800°C, e.g., 300-700°C, the time is 0.5-8h, e.g., 1-8h or 1-5h.

15. A method for simultaneously reducing both SOx and NOx from flue gas, which comprises, under a condition for removing SOx and NOx, contacting the flue gas with a catalyst according to any one of the preceding claims or a catalyst prepared by a preparation method according to any one of the preceding claims;

preferably, the condition for removing SOx and NOx includes: the temperature is 300-1000°C, e.g. 500-800°C, or 600-750°C, or 625-750°C, or 650-750°C, or 675-750°C, or 700-750°C, or 725-750°C, or 600-725°C, or 625-725°C, or 650-725°C, or 675-725°C, or 700-725°C, or 600-700°C, or 625-700°C, or 650-700°C, or 675-700°C, or 600-675°C, or 625-675°C, or 650-675°C, or 600-650°C, or 625-650°C, or 600-625°C; the pressure is 0-4 MPa, e.g. 0.01-4 MPa, or 0.02-4 MPa, or 0-0.5 MPa; the volumetric hourly space velocity of flue gas is 100-50000 $h^{-1}$ or 200-20000$h^{-1}$; and/or

preferably, in the flue gas, the SOx content is 0.001-0.5 vol%, the NOx content is 0.001-0.3 vol%; or the volume fractions of SOx and NOx in the flue gas are respectively 1-3000 $\mu$L/L, and the molar ratio of SOx to NOx is 0.5:1-2:1; and/or

preferably, the flue gas is a flue gas containing a certain concentration of SOx and NOx at the same time, e.g. catalytic cracking regeneration flue gas; preferably, contacting the catalytic cracking regeneration flue gas with the catalyst is carried out in a flue gas passway provided after a catalytic cracking cyclone separator and/or after a CO incinerator.

<table>
<tr><td colspan="3"><div style="text-align:center"><strong>INTERNATIONAL SEARCH REPORT</strong></div></td><td colspan="2">International application No.<br><br><div style="text-align:center"><strong>PCT/CN2022/118245</strong></div></td></tr>
</table>

| | |
|---|---|
| **A.** | **CLASSIFICATION OF SUBJECT MATTER** |

B01D 53/60(2006.01)i;  B01J 23/89(2006.01)i;  B01J 37/02(2006.01)i;  B01J 23/02(2006.01)i;  B01J 23/10(2006.01)i

According to International Patent Classification (IPC) or to both national classification and IPC

| | |
|---|---|
| **B.** | **FIELDS SEARCHED** |

Minimum documentation searched (classification system followed by classification symbols)

B01D; B01J

Documentation searched other than minimum documentation to the extent that such documents are included in the fields searched

Electronic data base consulted during the international search (name of data base and, where practicable, search terms used)

CNABS; CNTXT; DWPI; SIPOABS; CNKI; USTXT; EPTXT; JPTXT; WOTXT; ISI Web of Knowledge; 万方, WANFANG; 超星, CHAOXING: 中国石油化工股份有限公司, 中石化石油化工科学研究院有限公司, 脱硫, 脱硝, 脱氮, 稀土, 镧, 铈, 贵金属, 铂, 钯, 金, 钌, 铑, 铼, 银, 铱, 钴, 铁, 镍, 铜, 锌, 钒, 镁, 钙, desulfuriz+, denitrat+, rare earth, La, Ce, Pt, platinum, Pd, palladium, Au, gold, Ru, Rh, rhenium, Ag, silver, Iridium, Co, Fe, iron, Cu, copper, Zn, zinc, vanadium, Mg, magnesium, Ca

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 110787834 A (SHANGHAI RUNQI CHEMICAL TECHNOLOGY CO., LTD.) 14 February 2020 (2020-02-14)<br>    description, paragraph 10, and embodiment 2 | 1-15 |
| A | US 2012036840 A1 (NAM IN-SIK et al.) 16 February 2012 (2012-02-16)<br>    entire document | 1-15 |
| A | JP 2003038937 A (VALTION TEKNILLINEN et al.) 12 February 2003 (2003-02-12)<br>    entire document | 1-15 |
| A | CN 111939754 A (CHINA PETROLEUM & CHEMICAL CORPORATION et al.) 17 November 2020 (2020-11-17)<br>    entire document | 1-15 |

☐ Further documents are listed in the continuation of Box C.          ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| <div style="text-align:center">**04 November 2022**</div> | <div style="text-align:center">**29 November 2022**</div> |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/118245**

| Patent document cited in search report | | | Publication date (day/month/year) | Patent family member(s) | | | Publication date (day/month/year) |
|---|---|---|---|---|---|---|---|
| CN | 110787834 | A | 14 February 2020 | None | | | |
| US | 2012036840 | A1 | 16 February 2012 | JP | 2012035253 | A | 23 February 2012 |
| | | | | EP | 2418011 | A1 | 15 February 2012 |
| | | | | CN | 102371152 | A | 14 March 2012 |
| | | | | KR | 20120021644 | A | 09 March 2012 |
| | | | | US | 2014186226 | A1 | 03 July 2014 |
| | | | | KR | 101189238 | B1 | 09 October 2012 |
| | | | | US | 8735318 | B2 | 27 May 2014 |
| | | | | JP | 5685757 | B2 | 18 March 2015 |
| | | | | CN | 102371152 | B | 25 March 2015 |
| | | | | US | 9180432 | B2 | 10 November 2015 |
| | | | | EP | 2418011 | B1 | 01 June 2016 |
| JP | 2003038937 | A | 12 February 2003 | WO | 03011438 | A1 | 13 February 2003 |
| | | | | AU | 2002323965 | A1 | 17 February 2003 |
| | | | | JP | 2003053151 | A | 25 February 2003 |
| | | | | EP | 1424121 | A1 | 02 June 2004 |
| | | | | US | 2004184978 | A1 | 23 September 2004 |
| | | | | JP | 3732124 | B2 | 05 January 2006 |
| | | | | JP | 3745988 | B2 | 15 February 2006 |
| | | | | EP | 1424121 | A4 | 02 August 2006 |
| | | | | US | 7175822 | B2 | 13 February 2007 |
| CN | 111939754 | A | 17 November 2020 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1334316 A
- CN 104399478 A
- CN 101311248 B
- CN 110787834 A

**Non-patent literature cited in the description**

- Petrochemical Analysis Methods (RIPP Experimental Methods). Science Press, 1990